(19)

Europäisches
Patentamt
European
Patent Office
Office européen
des brevets

(11) **EP 4 242 944 A1**

(12) **EUROPEAN PATENT APPLICATION**
published in accordance with Art. 153(4) EPC

(43) Date of publication:
**13.09.2023 Bulletin 2023/37**

(21) Application number: **20960837.1**

(22) Date of filing: **06.11.2020**

(51) International Patent Classification (IPC):
*G06Q 10/08* (2023.01)

(52) Cooperative Patent Classification (CPC):
**G06Q 10/08**

(86) International application number:
**PCT/JP2020/041601**

(87) International publication number:
**WO 2022/097285 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventors:
• **MARUYAMA, Kazunori
Kawasaki-shi, Kanagawa 211-8588 (JP)**
• **YAMAZAKI, Takashi
Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **INFORMATION PROCESSING DEVICE, SEARCH METHOD, AND SEARCH PROGRAM**

(57) An initial order sequence generation unit 101 generates an initial order sequence of a candidate order to which an order sequence is not assigned, from among a plurality of orders. An order sequence search unit 102 repeats processing for generating a combination of orders by selecting a first order of the initial order sequence, selecting an order with a best index of a picking efficiency from among the subsequent candidate orders, for the first order, and assigning the order sequence and determines the order sequence of the plurality of orders that is divided for each combination. An efficiency index evaluation unit 103 determines an optimum order sequence with the best index of the picking efficiency for the plurality of orders, based on a plurality of the different order sequences determined by the order sequence search unit 102.

FIG. 1

EP 4 242 944 A1

**Description**

FIELD

The present invention relates to an information processing apparatus, a search method, and a search program.

BACKGROUND

When works are performed for storing articles and delivering the articles in a delivery center or the like, works are performed for picking up a designated article from among the plurality of articles stored in a warehouse according to a slip, a list, or the like, storing the article in a cart, and transferring the articles to person in charge of a subsequent work such as inspection, sorting, or packing. Such works are referred to as a picking work. The picking work is processed in units called orders in which an article for one destination is designated by one slip, one list, or the like.

For the picking work in the warehouse, a method is often used, in which a worker goes around the warehouse and places a picked product on the cart or a container on the cart. In the picking work, many workers go back and forth in the warehouse and collect products. Since many resources are spent for the picking work in logistics operations, this picking work largely affects productivity. In addition, labor costs are high, it is required to improve a work efficiency of the picking work.

One of various ways to improve an efficiency of the picking work is multi-picking. The multi-picking is a picking method for collectively executing a plurality of orders in one turn corresponding to one round. In a case where a warehouse area is large and products designated by the respective orders are distributed in the warehouse in the picking work in the warehouse, the work using the multi-picking is more efficient than a work for executing one order in one turn.

In a case where the multi-picking is performed, how to select orders to be combined is a point that determines the efficiency of the picking work. Here, an index representing the efficiency of the multi-picking can be classified into two including linear and non-linear. The linear index is an index that an index of each order does not change according to another order to be combined, and for example, is a total article weight per turn, and more specifically, an absolute difference of the article designated by each order from an average value of the total article weight. The non-linear index is an index that the index of each order changes according to another order to be combined, and is, for example, a total travel distance or a product duplication rate.

A technique for improving the efficiency of such a picking work includes the following. For example, there is a technique for obtaining a combination of orders that makes the total travel distance be the shortest. In addition, there is a technique for obtaining all combinations of picking orders and selecting a picking order with the smallest number of times of picking in a case where the number of rounds is the smallest and the number of rounds is the same, as setting a volume and a weight as constraint conditions. Furthermore, there is a technique for storing target information in which sequence information indicating a sequence to be picked and specific information of a picking target are associated, acquiring an actual picking sequence using the specific information, sequentially comparing the acquired sequence with a sequence designated by the target information, and determining whether or not the picking sequence is correct. Furthermore, there is a technique for rearranging information regarding a plurality of types of articles in descending order of the volume and picking up the articles in the descending order of the volume up to an upper limit value of the volume at which the articles can be picked up.

CITATION LIST

PATENT DOCUMENT

Patent Document 1: Japanese Laid-open Patent Publication No. 2020-57252
Patent Document 2: Japanese Laid-open Patent Publication No. 2000-118640
Patent Document 3: Japanese Laid-open Patent Publication No. 2015-59023
Patent Document 4: Japanese Laid-open Patent Publication No. 2012-116582

SUMMARY

[TECHNICAL PROBLEM]

However, to obtain an optimal order combination with dynamic programming that is a typical method for solving a knapsack problem within a realistic time is possible in a case where a linear index is used and is difficult in a case where a non-linear index is used. Furthermore, with a technique using a combination with the minimum total travel distance in a round robin manner, a calculation time is enormous in a case where the number of orders increases, and it is difficult to obtain the optimum order combination within a realistic time.

In addition, with a technique for obtaining a picking order with the smallest number of rounds as setting the volume and the weight as the constraint conditions, the number of combinations is enormous in a case where the number of orders is large. Therefore, it is difficult to obtain the optimum order combination in a realistic time. Furthermore, with a technique for acquiring an actual picking order, comparing an order designated in object information, and determining whether or not the picking order is correct, a target is the correctness of the picking order, and it is difficult to improve an efficiency of rounds. Furthermore, with the technique for picking up the articles in descending order of the volume up to the upper limit value of the volume at which the articles can be picked up, the non-linear index is not considered, and it is difficult to specify the optimum order combination for multi-picking. Therefore, no matter which technique is used, it is difficult to improve the efficiency of the picking work including the multi-picking.

The disclosed technology is made in view of the above, and an object is to provide an information processing apparatus, a search method, and a search program that improve an efficiency of a picking work.

[SOLUTION TO PROBLEM]

In one aspect, an information processing apparatus, a search method, and a search program disclosed in the present application are an information processing apparatus that receives a plurality of orders each including information used to specify a plurality of picking targets, specifies an order sequence of the plurality of orders, and includes the following units. An initial order sequence generation unit generates an initial order sequence of a candidate order, to which the order sequence is not assigned, from among the plurality of orders. An order sequence search unit repeats processing for generating a combination of the orders by selecting a first order of the initial order sequence, selecting an order with the best index of a picking efficiency from among the subsequent candidate orders, for the first order, and assigning the order sequence and determines the order sequence of the plurality of orders that is divided for each combination. An efficiency index evaluation unit determines an optimum order sequence with the best index of the picking efficiency for the plurality of orders, based on the plurality of different order sequences determined by the order sequence search unit.

According to an aspect of the embodiments, an information processing apparatus that receives a plurality of orders each of which includes information used to specify a plurality of picking targets and specifies an order sequence of the plurality of orders, the information processing apparatus includes an initial order sequence generation unit configured to generate an initial order sequence of a candidate order to which the order sequence is not assigned, from among the plurality of orders; an order sequence search unit configured to repeat processing for generating a combination of the orders by selecting a first order of the initial order sequence, selecting an order with a best index of a picking efficiency for the first order, from the subsequent candidate orders, and assigning the order sequence and to determine the order sequence of the plurality of orders divided for each combination; and an efficiency index evaluation unit configured to determine an optimum order sequence with the best index of the picking efficiency for the plurality of orders, based on a plurality of the different order sequences determined by the order sequence search unit.

[ADVANTAGEOUS EFFECTS OF INVENTION]

According to one aspect of an information processing apparatus, a search method, and a search program disclosed in the present application, an effect is obtained that an efficiency of a picking work can be improved.

BRIEF DESCRIPTION OF DRAWINGS

FIG. 1 is a block diagram of an order sequence search device according to a first embodiment;
FIG. 2 is a diagram illustrating an example of a picking order list;
FIG. 3 is a diagram for explaining an example of an initial order sequence;
FIG. 4 is a correspondence diagram between a shelf number and an area number;
FIG. 5 is a diagram illustrating a shelf area correspondence table;
FIG. 6 is a diagram illustrating an inter-area travel distance table;
FIG. 7 is a diagram illustrating an example of a flow of order sequence determination by an order sequence search unit according to the first embodiment;
FIG. 8 is a diagram for explaining a method for determining an optimum order sequence according to the first embodiment;

FIG. 9 is a flowchart illustrating an outline of processing for determining an optimum order combination;

FIG. 10 is a flowchart illustrating details of the processing for determining the optimum order combination according to the first embodiment;

FIG. 11 is a block diagram illustrating an order sequence search device according to a second embodiment;

FIG. 12 is a diagram for explaining a flow of order sequence search processing according to the second embodiment;

FIG. 13 is a diagram for explaining a flow of order sequence determination according to the second embodiment;

FIG. 14 is a flowchart illustrating details of processing for determining an optimum order combination according to the second embodiment;

FIG. 15 is a block diagram of an order sequence search device according to a third embodiment;

FIG. 16 is a flowchart illustrating details of processing for determining an optimum order combination according to the third embodiment; and

FIG. 17 is a hardware configuration diagram of a server.

DESCRIPTION OF EMBODIMENTS

Hereinafter, embodiments of an information processing apparatus, a search method, and a search program disclosed in the present application will be described in detail with reference to the drawings. Note that the information processing apparatus, the search method, and the search program disclosed in the present application are not limited to the following embodiments.

[First Embodiment]

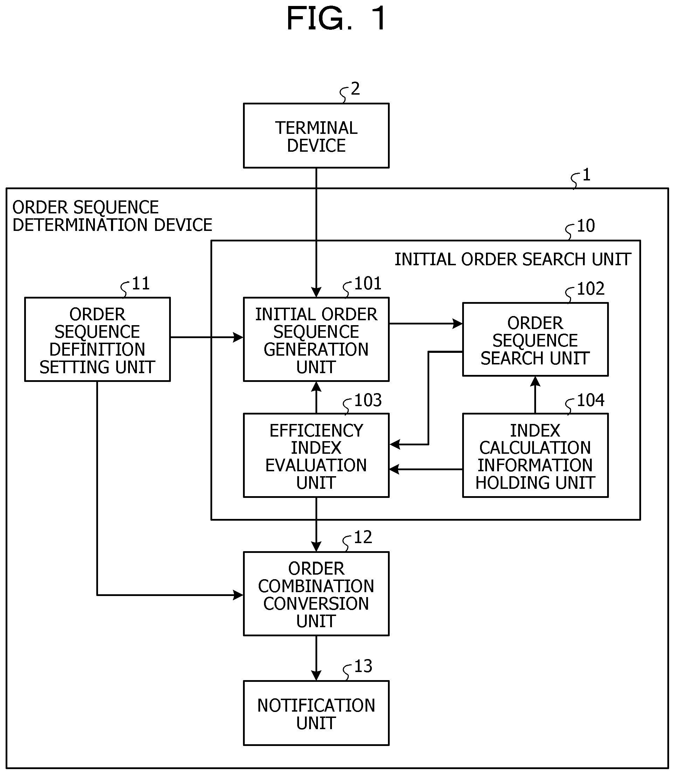

FIG. 1 is a block diagram illustrating an order sequence search device according to a first embodiment. An order sequence determination device 1 that is an information processing apparatus is a device that divides a plurality of given orders into groups of which an upper limit number is a predetermined number and determines a picking order. As illustrated in FIG. 1, the order sequence determination device 1 includes an initial order search unit 10, an order sequence definition setting unit 11, an order combination conversion unit 12, and a notification unit 13.

The initial order search unit 10 executes processing for rearranging the plurality of given orders and determining an order sequence that makes a value of an index be better. In the present embodiment, a case will be described where a total travel distance is used as an index for improving an efficiency of a picking work. Furthermore, in the following description, description will be made while it is assumed that the upper limit of the number of orders to be processed in one turn be three and a set of orders to be processed in one turn be one group. For example, in a case where an upper limit of containers that can be loaded on a cart is three, if it is assumed that articles designated by one order be stored in one container, the upper limit of the number of orders that can be processed is three.

Hereinafter, details of functions of the initial order search unit 10 will be described. The initial order search unit 10 includes an initial order sequence generation unit 101, an order sequence search unit 102, an efficiency index evaluation unit 103, and an index calculation information holding unit 104.

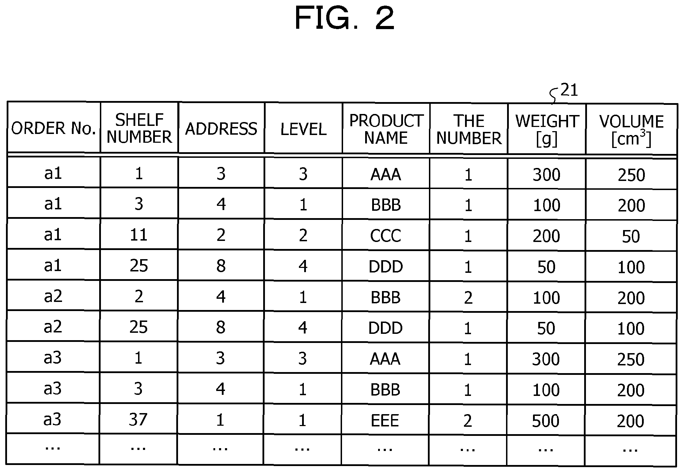

The initial order sequence generation unit 101 acquires a picking order list 21 illustrated in FIG. 2 from a terminal device 2. FIG. 2 is a diagram illustrating an example of the picking order list. As illustrated in FIG. 2, in the picking order list 21, information regarding each article designated by each order is registered in association with an order number assigned to each order. The information regarding the article includes a shelf number, an address, and a level that indicate an arrangement position, a product name, the number, a weight, a volume, or the like.

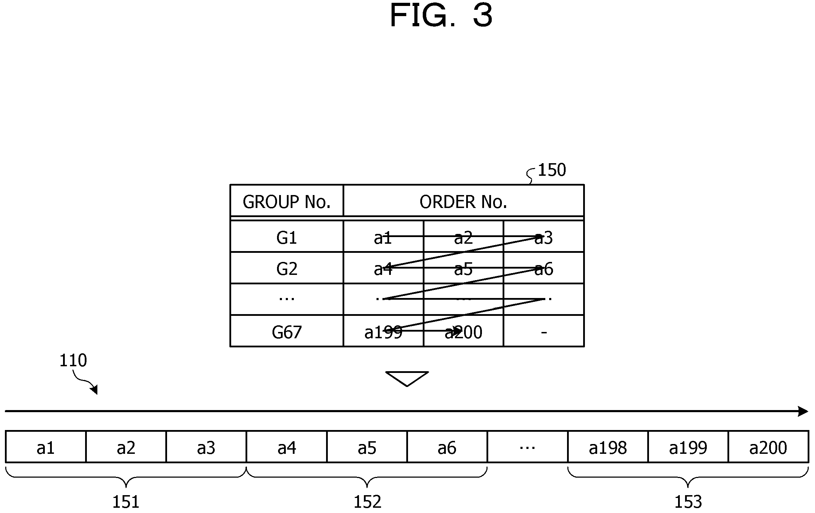

The initial order sequence generation unit 101 acquires an order sequence definition used to generate an order sequence that defines an order combination from the order sequence definition setting unit 11. Then, the initial order sequence generation unit 101 generates an initial order sequence 110 illustrated in FIG. 3, according the order sequence definition. FIG. 3 is a diagram for explaining an example of the initial order sequence.

As illustrated in FIG. 3, an order combination 150 that is finally created and notified by the order sequence determination device 1 is represented by a two-dimensional array in which orders included in each group that is a set of three or less orders are registered. However, with the two-dimensional array like the order combination 150, it is difficult to overview all the orders and determine an order sequence. Therefore, the order sequence definition held by the order sequence definition setting unit 11 includes information used to set an order sequence of a one-dimensional array that is a one-dimensional array used to define the order combination 150 in FIG. 3. The initial order sequence generation unit 101 generates the initial order sequence 110 by representing the order combination 150 in the two-dimensional array as the order sequence that is the one-dimensional array according to the order sequence definition, using all the orders included in the picking order list 21.

For example, the initial order sequence generation unit 101 defines the order combination 150 using the initial order sequence 110 in which order numbers assigned to respective groups are arranged in a group number sequence. The initial order sequence in FIG. 3 represents a sequence of orders to be processed according to an arrow. The initial order sequence 110 in FIG. 3 illustrates a case where the number of orders is 200, the upper limit number of orders in a group is three, and three orders are included in each of groups other than the final group.

For example, the initial order sequence 110 can arrange each order included in the order combination 150 illustrated in FIG. 3 in the sequence represented by the arrow. Specifically, in the initial order sequence 110 in FIG. 3, a range 151 represents orders in a group G1, a range 152 represents orders in a group G2, followed by groups each including a combination of three orders, and a final range 153 represents orders in a group G67. However, the method for generating the initial order sequence 110 may be another method, as long as orders are arranged in a one-dimensional array.

Returning to FIG. 1, the description will be continued. The initial order sequence generation unit 101 outputs the generated initial order sequence 110 to the order sequence search unit 102. Thereafter, in a case where a predetermined number of times of order sequence searches have not been completed, after completion of an order sequence search using the output initial order sequence 110, the initial order sequence generation unit 101 receives an instruction to generate a next initial order sequence 110 from the efficiency index evaluation unit 103.

Then, the initial order sequence generation unit 101 generates an initial order sequence 110 different from the initial order sequence 110 that is output at the previous time and outputs the initial order sequence 110 to the order sequence search unit 102. For example, the initial order sequence generation unit 101 generates the initial order sequence 110 by randomly selecting orders one by one from the orders included in the picking order list 21 and arranging the orders in a line. The initial order sequence generation unit 101 repeats the generation and output of the initial order sequences 110 until the predetermined number of times of order sequence searches have been completed. In other words, the initial order sequence generation unit 101 generates the initial order sequences 110 as many as the predetermined number of times.

The index calculation information holding unit 104 is a storage device that holds information used to calculate a value of an index in a case where the orders are combined. Here, an arrangement state of articles to be picked will be described.

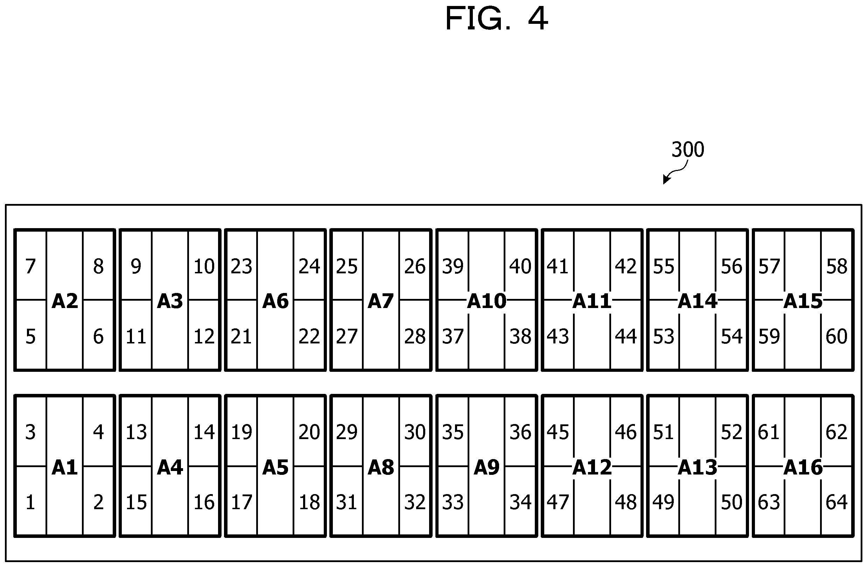

FIG. 4 is a correspondence diagram between a shelf number and an area number. In the present embodiment, shelves #1 to #64 illustrated in FIG. 4 are arranged in a warehouse 300. Then, the articles are stored in the shelves #1 to #64. An address is assigned to each of the shelves #1 to #64 in a planar direction illustrated in FIG. 4, and each of the shelves #1 to #64 includes a plurality of levels in a vertical direction of the page in FIG. 4. In other words, the article arrangement position is indicated by the shelf number, the address, and the level in the picking order list 21. Moreover, areas A1 to A16 are set in each of which four of the shelves #1 to #64 are grouped. For example, the shelves #1 to #4 are included in the area A1. Furthermore, the shelves #5 to #8 are included in the area A2. As described above, the position of the article is specified based on the shelf, the address, and the level. However, if a travel distance is calculated using these pieces of information, a calculation amount increases. In a case where an actual picking work is considered, a region indicated by each of the areas A1 to A16 can be considered to be the same position. Therefore, in the present embodiment, it is assumed to consider the areas A1 to A16 as the positions of the articles to be picked and calculate a travel distance in order to reduce the calculation amount, the initial order search unit 10 uses distances between the areas A1 to A16 as the information used to calculate the value of the index.

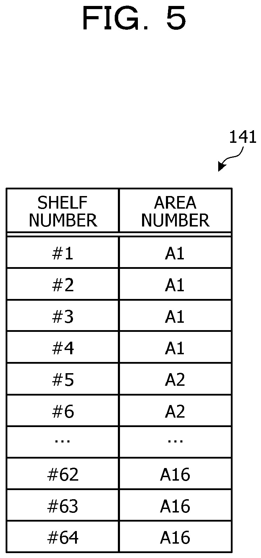

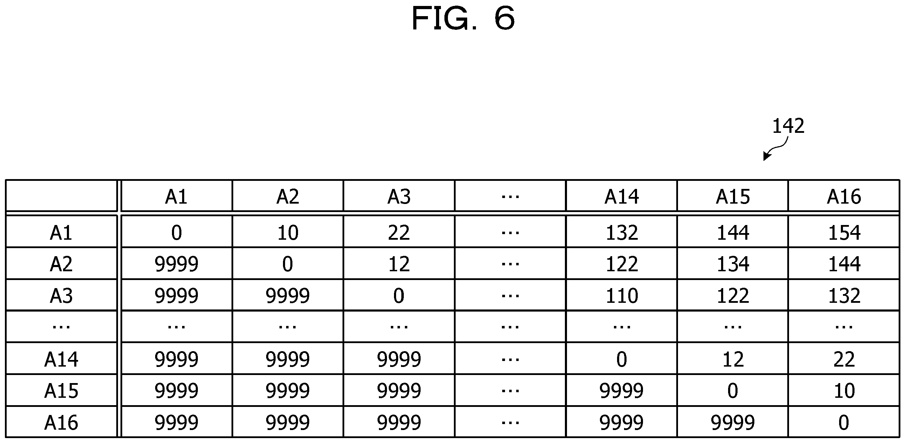

FIG. 5 is a diagram illustrating a shelf area correspondence table. Furthermore, FIG. 6 is a diagram illustrating an inter-area travel distance table. The index calculation information holding unit 104 holds a shelf area correspondence table 141 illustrated in FIG. 5 and an inter-area travel distance table 142 illustrated in FIG. 6. By using the information held by the index calculation information holding unit 104, a value of an index of picking processing can be calculated from the distances between the areas A1 to A16.

In the shelf area correspondence table 141 in FIG. 5, a correspondence between the shelf number assigned to each of the shelves #1 to #64 and the area number assigned to each of the areas A1 to A16 including each of the shelves #1 to #64 is registered. In FIG. 5, the shelf numbers of the respective shelves #1 to #64 are represented by #1 to #64, and the area numbers of the areas A1 to A16 are represented by A1 to A16.

The inter-area travel distance table 142 in FIG. 5 illustrates each of distances between the respective areas A1 to A64. The inter-area travel distance table 142 represents a travel distance from an area with an area number in the vertical axis to an area with an area number in the horizontal axis. For example, a travel distance from the area A1 to the area A2 is 222. Here, in the warehouse 300, traveling between the areas is limited to one-way traveling. Therefore, since retrograding in the one-way traveling is prohibited in the inter-area travel distance table 142, a sufficiently large value is set to an element that cannot be reached without retrograding. For example, since traveling from the area A2 to the area A1 is retrograding of the one-way traveling, the travel distance is set to 9999.

Returning to FIG. 1, the description will be continued. The order sequence search unit 102 receives an input of the initial order sequence 110 from the initial order sequence generation unit 101. Next, the order sequence search unit 102 determines an order sequence by assigning orders for each group in order from the first group to the acquired initial order sequence 110. Specifically, the order sequence search unit 102 assigns a first order, among the orders that have not been ordered, to a first order of each group. Hereinafter, the order that has not been ordered is referred to as a "candidate order".

Thereafter, the order sequence search unit 102 determines an order with the best index, one by one, according to a sequence of the remaining orders in the group, using the shelf area correspondence table 141 and the inter-area travel distance table 142 held by the index calculation information holding unit 104. The order sequence search unit 102 repeats to determine the orders for each group and determines all the order sequences and groups. The method for determining the order sequence described here is referred to as a "group unit sequential order determination procedure" below.

Here, the order sequence search unit 102 may determine a combination of orders in consideration of the constraint conditions, when orders included in each group are determined. For example, as setting the maximum weight that can be mounted on a cart as a constraint condition, the order sequence search unit 102 may determine a combination of orders with the best index so that the weight does not exceed the maximum weight. At this time, the order sequence search unit 102 may form a group including a set of orders of which the number does not reach the upper limit of the number of orders included in the group.

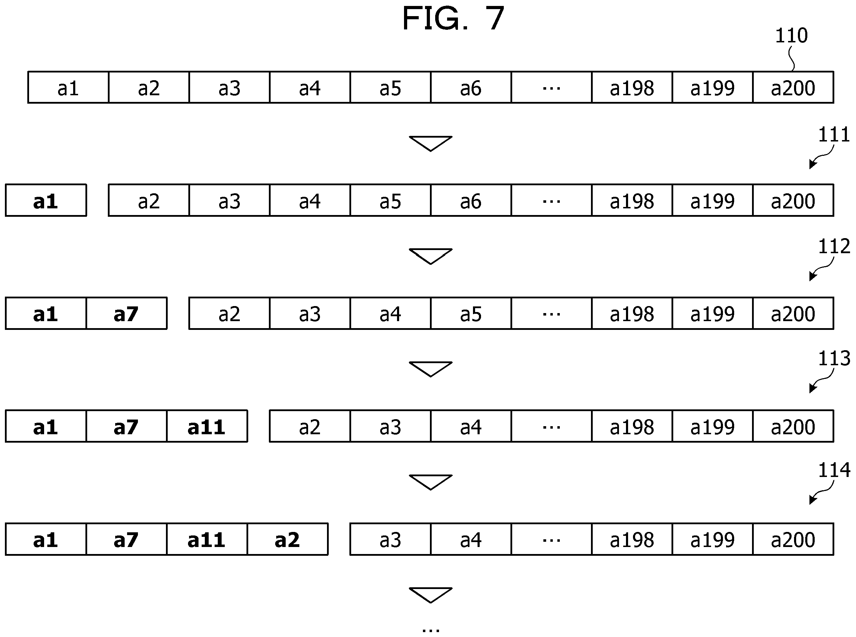

FIG. 7 is a diagram illustrating an example of a flow of order sequence determination by the order sequence search unit according to the first embodiment. Here, an example of the flow of the order sequence determination by the order sequence search unit 102 will be described with reference to FIG. 7. Here, a case will be described where orders a1 to a200 exist.

The order sequence search unit 102 acquires an initial order sequence 110 in which the orders a1 to a200 are arranged in order illustrated in FIG. 7. The order sequence search unit 102 sets a first group G1 to be an order assignment target. In this state, since there is no order to which a sequence is assigned, all the orders are candidate orders. Since no order is assigned to the group G1, the order sequence search unit 102 sets the first order a1 of the initial order sequence 110 as a first order of the group G1, as indicated in a state 111.

Next, the order sequence search unit 102 specifies an area where the article designated by each order is arranged using the shelf area correspondence table 141 and obtains a travel distance from an area of the order a1 to each candidate order from the inter-area travel distance table 142. Then, the order sequence search unit 102 specifies an order of which a total travel distance when the order is combined with the order a1 becomes the shortest, from among the remaining candidate orders one by one in a round-robin manner. Here, since the total travel distance is used as the index, a case where the total travel distance becomes the shortest corresponds to a case where the value of the index is the best. Here, in a case where the order a7 is assigned after the order a1, the total travel distance becomes the shortest. Therefore, the order sequence search unit 102 arranges the order a7 after the order a1 and assigns a sequential order to the order a7.

Here, when combining the orders one by one and calculating the total travel distance, the order sequence search unit 102 adopts an order at the time when the order of which the total travel distances before and after the combination are equal is found, and does not perform calculation for the remaining candidate orders. This is because, since the total travel distance after combining the orders cannot be shorter than the total travel distance before combining the orders, a case where the total travel distances are equal can be considered to be a case where the total travel distance is the shortest.

Similarly, since the total travel distance becomes the shortest in a case where the order a11 is assigned after the order a7, the order sequence search unit 102 arranges the order a11 after the order a7 as indicated in a state 113 and assigns a sequential order to the order a11. As a result, the order sequence search unit 102 determines the orders to be assigned to the group G1 and the sequence of the orders.

Next, the order sequence search unit 102 sets a group G2 following the group G1 to be an order assignment target. Since no order is assigned to the group G2, the order sequence search unit 102 sets the first order a2 of the candidate orders as a first order of the group G2 as indicated in a state 114. Then, the order sequence search unit 102 determines the orders to be assigned to the group G2 and the sequence of the orders, with the group unit sequential order determination procedure.

Thereafter, the order sequence search unit 102 assigns a sequential order up to the final order. Here, the number of groups may be increased, or a group to which three or less orders are assigned according to the constraint conditions or the like may exist. As a result, the order sequence search unit 102 determines an optimum candidate order sequence with the best index value in a case where the group unit sequential order determination procedure is used for the acquired initial order sequence. Then, the order sequence search unit 102 outputs the determined optimum candidate order sequence to the efficiency index evaluation unit 103.

The efficiency index evaluation unit 103 receives an input of the optimum candidate order sequence corresponding to the initial order sequence 110 output from the initial order sequence generation unit 101, from the order sequence search unit 102. Then, the efficiency index evaluation unit 103 calculates a value of an index of the acquired optimum candidate order sequence. Here, the value of the index for each group in the optimum candidate order sequence is calculated by the order sequence search unit 102. Therefore, the efficiency index evaluation unit 103 may acquire the value of the index for each group in the optimum candidate order sequence calculated by the order sequence search unit 102 and calculate the value of the index of the optimum candidate order sequence using the values. For example, in a case where the total travel distance is used as the index, the efficiency index evaluation unit 103 may calculate the value of the index of the optimum candidate order sequence, by acquiring the value of the total travel distance for each group in the optimum candidate order sequence and obtaining a total.

Here, the optimum candidate order sequence depends on how the orders in the initial order sequence 110 are arranged. Therefore, by considering different initial order sequences 110, an order sequence with better index value can be obtained. Therefore, the efficiency index evaluation unit 103 holds information regarding the predetermined number of times that is the number of times of order sequence search executions that has been determined in advance. Then, the efficiency index evaluation unit 103 determines whether or not the number of times of order sequence search executions has reached the predetermined number of times, from the acquired number of optimum candidate order sequences.

If the number of times of order sequence search executions does not reach the predetermined number, the efficiency index evaluation unit 103 instructs the initial order sequence generation unit 101 to generate the next initial order sequence 110. On the other hand, in a case where the number of times of order sequence search executions reaches the predetermined number of times, the efficiency index evaluation unit 103 compares the values of the indexes of the held optimum candidate order sequences and determines an order sequence with the best index value as the optimum order sequence, from among them. Thereafter, the efficiency index evaluation unit 103 outputs the optimum order sequence to the order combination conversion unit 12.

Here, to search for the optimum candidate order sequence with the best index value using the group unit sequential order determination procedure and to specify the optimum order sequence with the best index value from among the optimum candidate order sequence corresponds to "optimization of the order sequence". In a case where the total travel distance is used as the index, to search for the optimum candidate order sequence with the shortest total travel distance using the group unit sequential order determination procedure and to specify the optimum order sequence with the shortest total travel distance from among the optimum candidate order sequence corresponds to the optimization of the order sequence.

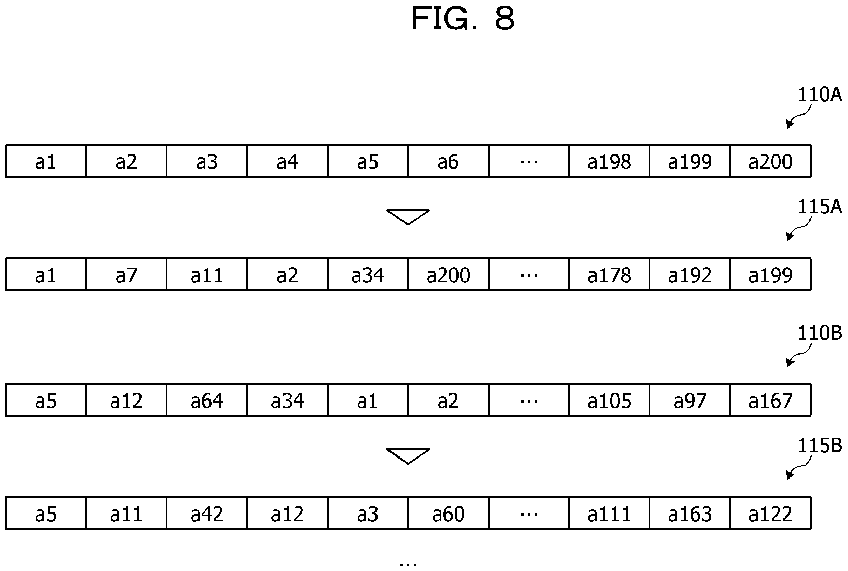

FIG. 8 is a diagram for explaining a method for determining an optimum order sequence according to the first embodiment. The order sequence search unit 102 obtains an optimum candidate order sequence 115A from an initial order sequence 110A. For example, a value of a total travel distance of the initial order sequence 110A is 4000. Then, the efficiency index evaluation unit 103 obtains the value of the total travel distance that is an index of the optimum candidate order sequence 115A as 3756. In this case, the value of the index of the optimum candidate order sequence 115A is better than the initial order sequence 110A. Furthermore, the order sequence search unit 102 obtains an optimum candidate order sequence 115B from an initial order sequence 110B. For example, a value of a total travel distance of the initial order sequence 110B is 3981. Then, the efficiency index evaluation unit 103 obtains the value of the total travel distance that is an index of the optimum candidate order sequence 115B as 3401. In this case, the value of the index of the optimum candidate order sequence 115B is better than the initial order sequence 110B. The values of the indexes of both of the optimum candidate order sequences 115A and 115B are better than the initial order sequence 110, the respective values of the indexes are different. In this way, the value of the index of the optimum candidate order sequence changes according to the initial order sequence 110. The efficiency index evaluation unit 103 acquires the optimum candidate order sequences of which the number is according to the predetermined number of times, compares the values of the respective total travel distances thereafter, and sets the optimum candidate order sequence having the best index value as the optimum order sequence.

Returning to FIG. 1, the description will be continued. The order sequence definition setting unit 11 holds an order sequence definition used to generate an order sequence that defines an order combination, in advance. For example, the order sequence definition setting unit 11 holds the order sequence definition used to generate the order sequence that is the one-dimensional array that defines the order combination 150 in FIG. 3. Specifically, the order sequence definition setting unit 11 holds information indicating that, for example, an upper limit of the number of orders that are arranged from the head for each group and are included in the group is three as the order sequence definition.

The order combination conversion unit 12 receives an input of the optimum order sequence from the efficiency index evaluation unit 103. Moreover, the order combination conversion unit 12 acquires the order sequence definition from the order sequence definition setting unit 11.

Next, the order combination conversion unit 12 acquires a conversion algorithm used to convert an order sequence into an order combination from the order sequence definition. The conversion algorithm is, for example, an algorithm used to convert an order sequence of a one-dimensional array into a two-dimensional array in which a set of orders is registered for each group having a structure similar to that of the order combination 150 in FIG. 3.

Thereafter, the order combination conversion unit 12 converts the optimum order sequence into an order combination using the generated conversion algorithm, and generates an optimum order combination. For example, the order combination conversion unit 12 generates an optimum order combination represented as a two-dimensional array in which a combination of orders is registered for each group. Thereafter, the order combination conversion unit 12

7

outputs the generated optimum order combination to the notification unit 13.

The notification unit 13 receives an input of information regarding the optimum order combination determined so that the index representing the efficiency of the picking work becomes better, from the order combination conversion unit 12. Then, the notification unit 13 displays the optimum order combination on a monitor or the like and notifies a picking worker or a picking work manager of the information regarding the optimum order combination with the better index value. For example, if the index is the total travel distance, the picking worker or the picking work manager can shorten a total travel distance at the time of the picking work by performing the picking work using the notified optimum order combination and can improve the efficiency of the picking work.

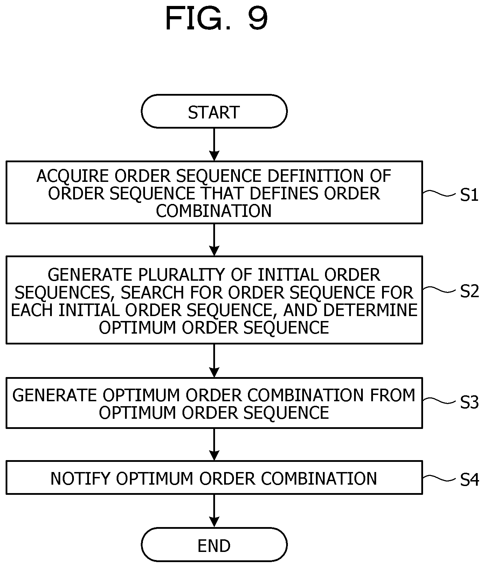

FIG. 9 is a flowchart illustrating an outline of processing for determining an optimum order combination. Next, an overall flow of processing for setting the optimum order combination will be described with reference to FIG. 9.

The initial order sequence generation unit 101 receives the picking order list 21 from the terminal device 2. Furthermore, the initial order sequence generation unit 101 acquires the order sequence definition that is the information used to generate the order sequence that defines the order combination, from the order sequence definition setting unit 11 (step S1).

Next, the initial order sequence generation unit 101 creates a plurality of initial order sequences 110 according to the order sequence definition, using the picking order list 21. The order sequence search unit 102 generates an optimum candidate order sequence from each initial order sequence 110 using the group unit sequential order determination procedure. The efficiency index evaluation unit 103 calculates a value of an index of each optimum candidate order sequence and determines an optimum candidate order sequence with the best index value as the optimum order sequence (step S2).

The order combination conversion unit 12 receives an input of the optimum order sequence from the efficiency index evaluation unit 103. Furthermore, the order combination conversion unit 12 acquires the order sequence definition from the order sequence definition setting unit 11. Then, the order combination conversion unit 12 generates an optimum order combination from the optimum order sequence using the order sequence definition (step S3).

The notification unit 13 acquires the optimum order combination generated from the optimum order sequence from the order combination conversion unit 12. Then, the notification unit 13 notifies the picking worker or the picking work manager of the acquired optimum order combination (step S4).

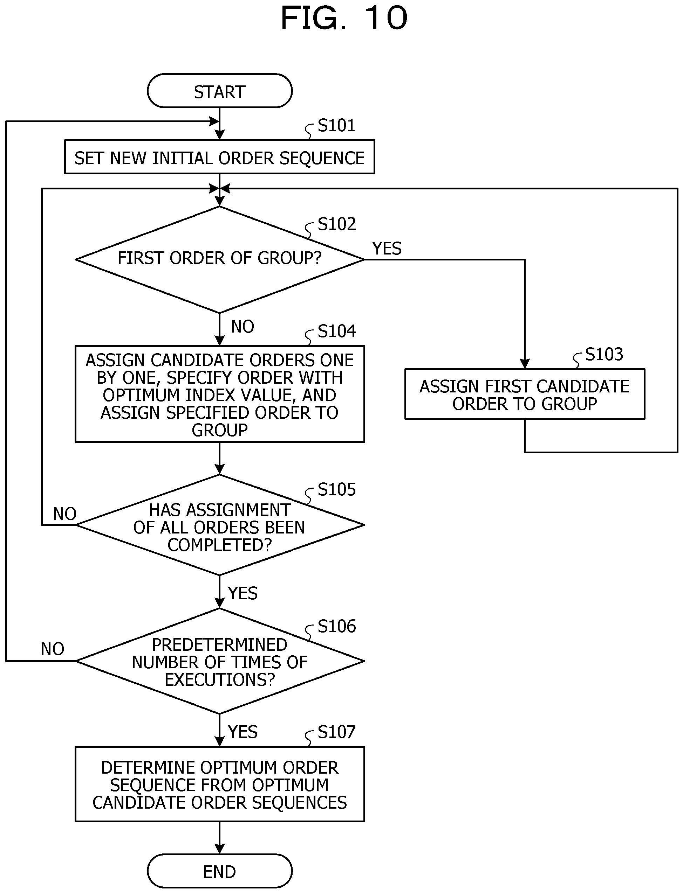

FIG. 10 is a flowchart illustrating details of the processing for determining the optimum order combination according to the first embodiment. FIG. 10 corresponds to an example of the processing executed in step S2 in FIG. 9. Next, a detailed flow of the processing for determining the optimum order combination according to the present embodiment will be described with reference to FIG. 10.

The initial order sequence generation unit 101 generates a new initial order sequence 110 according to the order sequence definition, for example, by randomly selecting an order from the picking order list 21 (step S101). Then, the initial order sequence generation unit 101 outputs the generated initial order sequence 110 to the order sequence search unit 102.

The order sequence search unit 102 receives an input of the initial order sequence 110 from the initial order sequence generation unit 101. Next, the order sequence search unit 102 determines whether or not an order to which a sequential order is assigned is a first order of a group to which the order is assigned (step S102).

In a case where the order is the first order of the group to which the order is assigned (step S102: Yes), the order sequence search unit 102 assigns a first order of the candidate orders that have not been ordered, from among orders arranged in a one-dimensional array, to the head of the group (step S103). Thereafter, the order sequence search unit 102 returns to step S102.

On the other hand, in a case where the order is not the first order of the group to which the order is assigned (step S102: No), the order sequence search unit 102 assigns the candidate orders as next orders one by one and specifies an order with an optimum index value. Then, the order sequence search unit 102 assigns the specified order as a next order in the group (step S104).

Next, the order sequence search unit 102 determines whether or not sequential orders have been assigned to all the orders included in the initial order sequence 110 (step S105). In a case where an order to which a sequential order has not been assigned remains (step S105: No), the order sequence search unit 102 returns to step S102.

On the other hand, in a case where the sequential orders have been assigned to all the orders included in the initial order sequence 110 (step S105: Yes), the order sequence search unit 102 outputs an optimum candidate order sequence generated by assigning the sequential orders to all the orders, to the efficiency index evaluation unit 103. The efficiency index evaluation unit 103 receives an input of the optimum candidate order sequence from the order sequence search unit 102. Then, the efficiency index evaluation unit 103 calculates a value of an index of the acquired optimum candidate order sequence, using the shelf area correspondence table 141 and the inter-area travel distance table 142 held by the index calculation information holding unit 14. Next, the efficiency index evaluation unit 103 determines whether or not an order sequence search has been performed a predetermined number of times (step S106). In a case where the number of times of order sequence search executions is less than the predetermined number of times (step S106: No), the processing for determining the optimum order combination returns to step S101.

On the other hand, in a case where the number of times of order sequence search executions has reached the predetermined number of times (step S106: Yes), the efficiency index evaluation unit 103 compares the values of the indexes of the respective optimum candidate order sequences and determines an optimum order sequence with the best index value (step S107). Thereafter, the efficiency index evaluation unit 103 outputs the optimum order sequence to the order combination conversion unit 12.

As described above, the order sequence determination device according to the present embodiment generates the initial order sequence in which the orders are arranged as the one-dimensional array. Then, the order sequence determination device determines the first order of the group for the initial order sequence, and sequentially finds the order with the best index from the first order, from among all the candidate orders in a round robin manner. Moreover, the order sequence determination device repeats the order sequence assignment processing for each group, determines the sequential orders and the groups of all the orders, and determines the optimum candidate order sequence. Thereafter, the order sequence determination device determines the optimum order sequence with the optimum index value, from among the respective optimum candidate order sequences. From the above, in a case where the number of orders is large, the order sequence determination device can select an order combination with a preferred index within a realistic time even in a case where the non-linear index is used as the index representing the picking efficiency, according to the group unit sequential order determination procedure as described above. By performing the picking work using the selected order combination, it is possible to improve the efficiency of the picking work. Furthermore, cost and a work load of the picking work can be reduced.

[Second Embodiment]

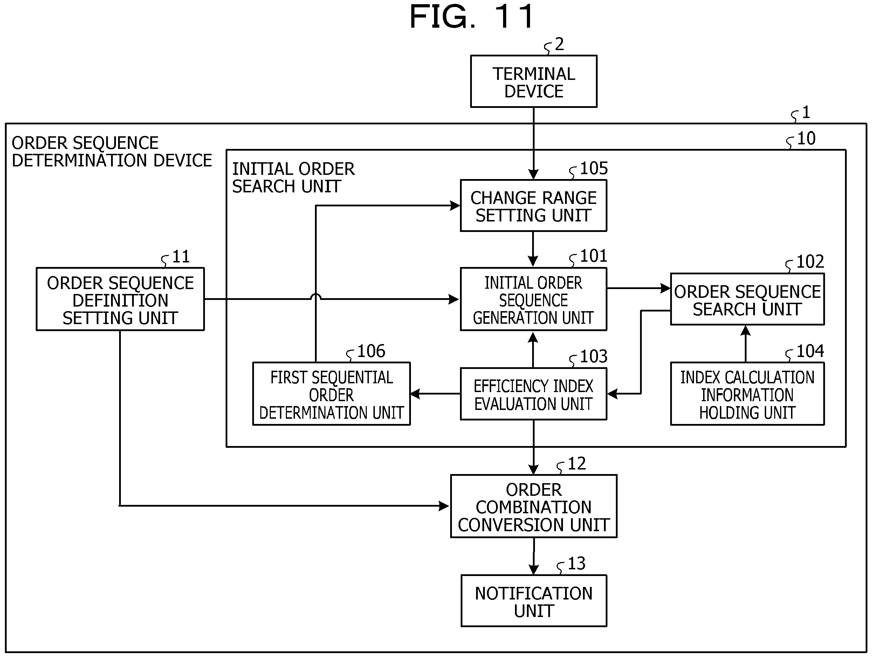

FIG. 11 is a block diagram of an order sequence search device according to a second embodiment. An order sequence determination device 1 according to the present embodiment differs from the first embodiment in that a range of candidate orders in a one-dimensional array to be changed is limited when assigning an order sequence so as to determine a first order. The order sequence determination device 1 according to the present embodiment includes a change range setting unit 105 and a first sequential order determination unit 106, in addition to each unit in the first embodiment. In the following description, description of an operation of each unit similar to the operation of each unit according to the first embodiment will be omitted.

The change range setting unit 105 includes, in advance, information regarding the number of orders to be changed that is the number of candidate orders to be changed. For example, the change range setting unit 105 sets the number of orders to be changed to six. Regarding the number of orders to be changed, a sequence having the best index can be determined as the number is large. However, as a tradeoff, a calculation amount increases. Therefore, it is preferable that the number of orders to be changed be determined according to a required picking work efficiency level and an allowable calculation time.

The change range setting unit 105 acquires a picking order list 21 from a terminal device. Then, the change range setting unit 105 sets the change-range number of orders from the beginning as a change range. Then, the change range setting unit 105 notifies an initial order sequence generation unit 101 of information regarding the set change range. Thereafter, the change range setting unit 105 receives an input of information regarding an order that is determined as a first order in the order sequence by the first sequential order determination unit 106, from the first sequential order determination unit 106.

Next, the change range setting unit 105 sets the change-range number of orders from a head of remaining candidate orders obtained by excluding the orders to which the sequential orders have been assigned, as the change range. Then, the change range setting unit 105 notifies the initial order sequence generation unit 101 of the picking order list 21, the information regarding the determined first order, and information regarding the set change range. Here, the information regarding the change range includes information regarding a position to be a first order in the change range and the number of orders in the change range.

Thereafter, in a case where an optimum order sequence is not obtained, the change range setting unit 105 receives an input of the information regarding the order of which the sequential order has been determined as the head of the candidate orders at the previous time, from the first sequential order determination unit 106. Thereafter, the change range setting unit 105 notifies the initial order sequence generation unit 101 of the information regarding the order of which the sequential order has been determined as the head of the candidate orders at the previous time and the information regarding the change range. Here, the change range setting unit 105 sets a case where a change range reaches the end of the initial order sequence 110 as a final change range. In addition, the change range setting unit 105 may have a configuration that sets all remaining candidate orders as the change range in a case where sequential orders of the orders in a range including the change-range number of orders from the end of the order sequence arranged in the one-dimensional array are determined.

The initial order sequence generation unit 101 receives an input of the picking order list 21 from the change range setting unit 105. Furthermore, the initial order sequence generation unit 101 receives an input of the information regarding the order of which the sequential order has been determined as the head of the candidate orders at the previous time and the information regarding the change range, from the change range setting unit 105. Then, the initial order sequence generation unit 101 sets candidate orders in a designated change range from among the remaining candidate orders arranged in the one-dimensional array, obtained by excluding the orders to which the sequential orders have been already assigned as change targets, fixes the remaining candidate orders, and generates a predetermined number of first-generation initial order sequences 110. Then, the initial order sequence generation unit 101 outputs the generated first-generation initial order sequences 110 to an order sequence search unit 102.

Thereafter, the initial order sequence generation unit 101 receives an input of an optimum candidate order sequence determined using a group unit sequential order determination procedure for each first-generation initial order sequence 110 and values of respective indexes, from an efficiency index evaluation unit 103. Then, the initial order sequence generation unit 101 generates next-generation initial order sequences 110, by using a genetic algorithm (GA) and setting the value of the index as an objective function.

For example, the initial order sequence generation unit 101 remains the initial order sequence 110 of the optimum candidate order sequence with the better index value, and generates the predetermined number of remaining initial order sequences 110 together with the remaining initial order sequence 110 as second-generation initial order sequences. Then, the initial order sequence generation unit 101 outputs the generated second-generation initial order sequences 110 to the order sequence search unit 102.

The initial order sequence generation unit 101 repeats the generation of the initial order sequence 110, using the genetic algorithm, using the value of the index as the objective function, until the generation reaches a predetermined generation and outputs the initial order sequences 110 to the order sequence search unit 102. For example, generations to be used are determined as 10 generations, the initial order sequence generation unit 101 repeats the generation and the output of the initial order sequences 110 until the generation reaches the 10th generation.

When the generation has reached the preset generation, a first order in the change range at that time is determined, and the initial order sequence generation unit 101 proceeds to generate an initial order sequence 110 corresponding to a next change range to be described below. The initial order sequence generation unit 101 receives an input of the information regarding the order of which the sequential order has been determined as the head of the candidate orders at the previous time and the information regarding the change range, from the change range setting unit 105. Then, the initial order sequence generation unit 101 sets candidate orders existing in a new change range as change targets, fixes orders to which sequential orders have been assigned and remaining orders, and generates an initial order sequence 110 for each generation. The initial order sequence generation unit 101 repeats the creation of the initial order sequence 110 for each generation each time when the first order of the candidate orders is determined, until sequential orders are assigned to all orders.

The order sequence search unit 102 receives an input of the predetermined number of initial order sequences 110 for each generation, from the initial order sequence generation unit 101. Then, the order sequence search unit 102 obtains an optimum candidate order using the group unit sequential order determination procedure, for each initial order sequence 110. At this time, the optimum candidate order sequence has been already obtained for the initial order sequence 110 inherited from the previous generation, and the order sequence search unit 102 can use the optimum candidate order sequence that has been already obtained. Thereafter, the order sequence search unit 102 outputs the obtained optimum candidate order sequence to the efficiency index evaluation unit 103.

The efficiency index evaluation unit 103 receives an input of the predetermined number of optimum candidate order sequences for each generation, for each candidate order to which the change range is set, from the order sequence search unit 102. Then, the efficiency index evaluation unit 103 calculates a value of an index of each optimum candidate order sequence. Furthermore, the efficiency index evaluation unit 103 manages generations from the number of times when a predetermined generations of the initial order sequences 110 are generated for the candidate orders to which the same change range is designated and each optimum candidate order sequence is obtained

In a case where the generation does not reach the final generation for a candidate order to which a specific change range is designated, the efficiency index evaluation unit 103 outputs the optimum candidate order sequence for each initial order sequence 110 and the value of each index to the initial order sequence generation unit 101

On the other hand, when the final-generation optimum candidate order sequences in a case where the specific change range is designated are determined, the efficiency index evaluation unit 103 outputs the final-generation optimum candidate order sequences and the value of each index to the first sequential order determination unit 106.

Furthermore, in a case where the change range includes a final order of the initial order sequence 110, in other words, in a case where the sequential orders of all the orders can be determined at that time, the efficiency index evaluation unit 103 compares the values of the indexes of the respective optimum candidate order sequences. Then, the efficiency index evaluation unit 103 determines the lowest candidate order sequence with the best index value as the optimum order sequence and outputs information regarding the optimum order sequence to an order combination conversion unit 12.

The first sequential order determination unit 106 receives an input of the final-generation optimum candidate order sequences for each of which the change range is designated and the value of each index from the efficiency index evaluation unit 103. Then, the first sequential order determination unit 106 specifies an optimum candidate order sequence with the best index value from among the acquired optimum candidate order sequences. Then, the first sequential order determination unit 106 sets a first order in the specified optimum candidate order sequence as a first order of candidate orders at that time and assigns a sequential order. Thereafter, the first sequential order determination unit 106 outputs information regarding the order of which the sequential order has been determined, as the first order of the candidate orders at that time, to the change range setting unit 105.

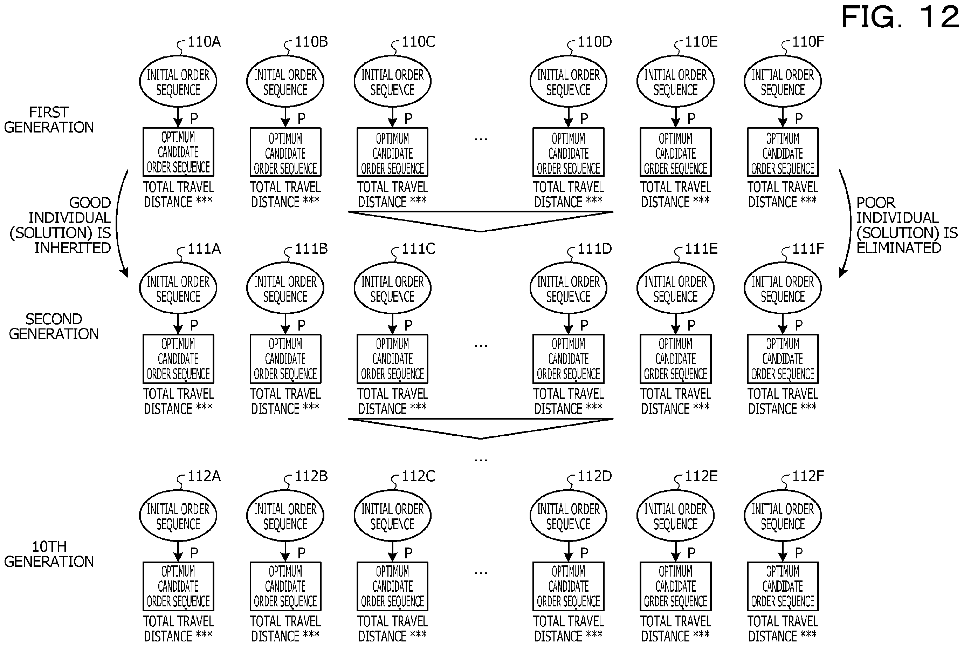

FIG. 12 is a diagram for explaining a flow of order sequence search processing according to the second embodiment. The flow of the order sequence search processing according to the present embodiment will be described with reference to FIG. 12. In FIG. 12, a procedure P represents the group unit sequential order determination procedure. Furthermore, here, a case where a total travel distance is used as the value of the index will be described.

The initial order sequence generation unit 101 sets a candidate order in the designated change range as a change target, fixes an order to which a sequential order has been already assigned and other candidate orders, and generates first-generation initial order sequences 110A to 110F. The order sequence search unit 102 executes the group unit sequential order determination procedure on each of the first-generation initial order sequences 110A to 110F and determines an optimum candidate order sequence for each of the initial order sequences 110A to 110F. The efficiency index evaluation unit 103 obtains a total travel distance of each optimum candidate order sequence.

Then, the initial order sequence generation unit 101 takes over the initial order sequence 110A of which the total travel distance is preferred, from among the first-generation initial order sequences 110A to 110F to the second generation. Furthermore, an individual with a poor total travel distance is considered as mating or mutation, the initial order sequence generation unit 101 eliminates the remaining first-generation initial order sequences 110B to 110F with the poor total travel distances. Next, the initial order sequence generation unit 101 newly generates initial order sequences 111B to 111F, adds the initial order sequence 110A inherited from the first generation, and sets the initial order sequences as the second-generation initial order sequences 110A and 111B to 111F. The order sequence search unit 102 executes the group unit sequential order determination procedure on each of the second-generation initial order sequences 110A and 111B to 111F and determines an optimum candidate order sequence for each of the initial order sequences 110A and 111B to 111F. The efficiency index evaluation unit 103 obtains a total travel distance of each optimum candidate order sequence.

In this way, the initial order sequence generation unit 101, the order sequence search unit 102, and the efficiency index evaluation unit 103 search for an order sequence with a shorter total travel distance, in cooperation with each other. Then, the initial order sequence generation unit 101, the order sequence search unit 102, and the efficiency index evaluation unit 103 repeat the order sequence search processing described above until the generation reaches a predetermined generation. For example, in a case where the generation is determined as generations up to the 10th generation, the initial order sequence generation unit 101, the order sequence search unit 102, and the efficiency index evaluation unit 103 repeats the search processing until the generation reaches the 10th generation. Then, the efficiency index evaluation unit 103 compares total travel distances of respective optimum candidate order sequences obtained from 10th-generation initial order sequences 112A to 112F and determines an optimum order sequence.

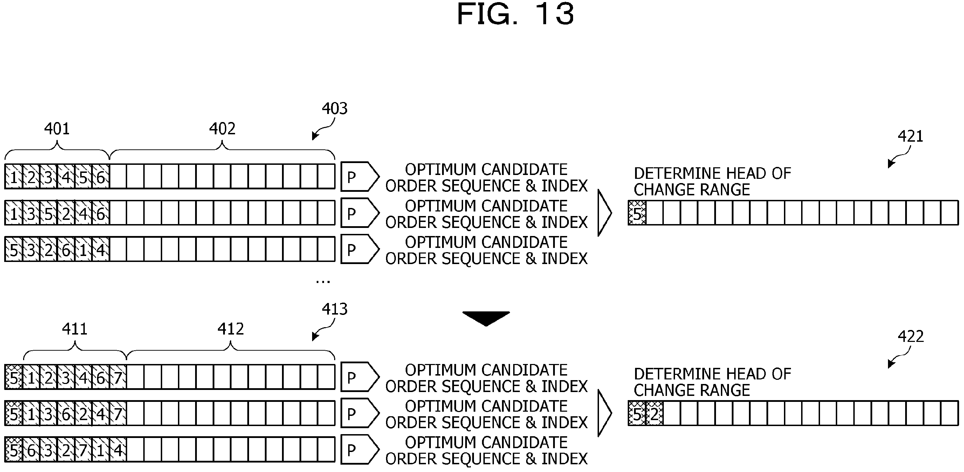

FIG. 13 is a diagram for explaining a flow of order sequence determination according to the second embodiment. Here, an outline from change range determination to order sequence determination will be described with reference to FIG. 13. Here, description will be made as assuming that the number of orders to be changed is six.

The change range setting unit 105 sets a change range 401 including six orders from a head of an order sequence as a first change range. The initial order sequence generation unit 101 sets the orders included in the change range 401 as change targets, fixes orders included in a remaining region 402, and generates initial order sequences 403 of each generation. Then, the order sequence search unit 102 executes the group unit sequential order determination procedure represented by the procedure P and determines an optimum candidate order sequence corresponding to each initial order sequence 403. The efficiency index evaluation unit 103 calculates a value of an index of each optimum candidate order sequence. Then, when a final-generation optimum candidate order sequence is obtained, the first sequential order determination unit 106 specifies an optimum candidate order sequence with the best index value and determines a sequential order of a first order in the change range 401 of the specified optimum candidate order sequence as indicated by an order sequence 421.

Next, the change range setting unit 105 sets a change range 411 including six orders from a first order of the candidate orders excluding the first order that has been determined to be within the next change range. The initial order sequence generation unit 101 sets the orders included in the change range 411, except for the order of which the sequential order has been determined, as change targets, fixes orders included in a remaining region 412, and generates an initial order sequence 413 of each generation. Then, the order sequence search unit 102 executes the group unit sequential order determination procedure and determines an optimum candidate order sequence corresponding to each initial order sequence 413. The efficiency index evaluation unit 103 calculates a value of an index of each optimum candidate order sequence. Then, when a final-generation optimum candidate order sequence is obtained, the first sequential order determination unit 106 specifies an optimum candidate order sequence with the best index value and determines a sequential order of a first order in the change range 411 of the specified optimum candidate order sequence as indicated by an order sequence 422.

By repeating the above processing, the first sequential order determination unit 106 assigns sequential orders to the orders from the head of the order sequence. Then, at the time when the sequential orders of all the orders are determined, the efficiency index evaluation unit 103 determines an optimum order sequence.

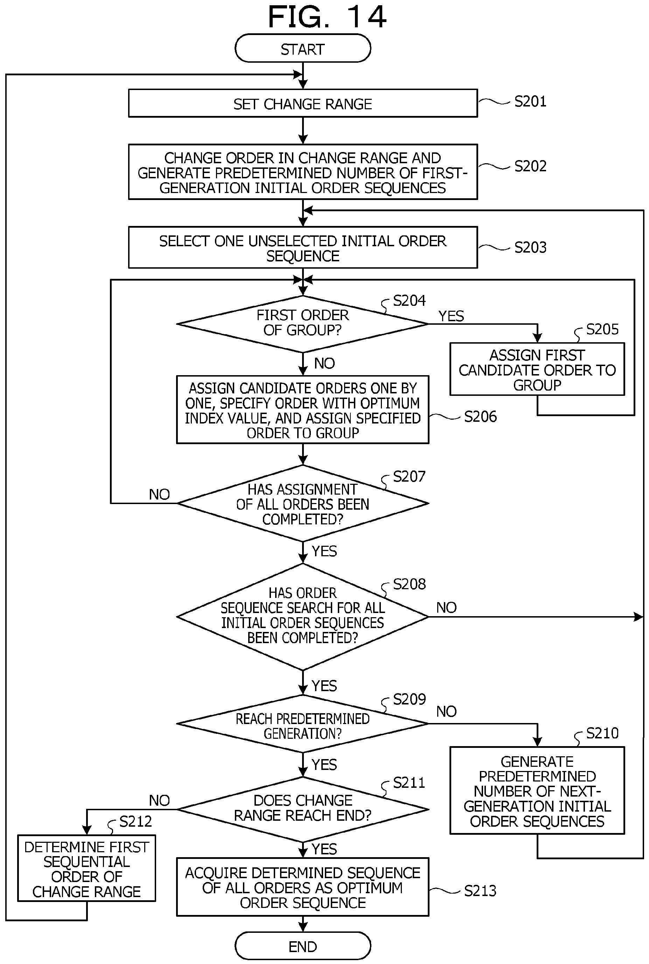

FIG. 14 is a flowchart illustrating details of processing for determining an optimum order combination according to the second embodiment. FIG. 14 corresponds to an example of the processing executed in step S2 in FIG. 9. Next, a detailed flow of the processing for determining the optimum order combination according to the present embodiment will be described with reference to FIG. 14.

The change range setting unit 105 sets a change range of an order sequence arranged in a one-dimensional array (step S201). Then, the change range setting unit 105 outputs information regarding the change range and information regarding an order of which a sequential order has been determined to the initial order sequence generation unit 101.

The initial order sequence generation unit 101 receives an input of the information regarding the change range and the information regarding the order of which the sequential order has been determined, from the change range setting unit 105. Then, the initial order sequence generation unit 101 sets a candidate order included in the designated change range as a change target, fixes the order of which the sequential order has been already determined and remaining candidate orders, and generates a predetermined number of first-generation initial order sequences 110 (step S202). Then, the initial order sequence generation unit 101 outputs the generated initial order sequence 110 to the order sequence search unit 102.

The order sequence search unit 102 acquires the predetermined number of initial order sequences 110. Then, the order sequence search unit 102 selects one initial order sequence 110 from among the unselected initial order sequences 110 (step S203).

Next, the order sequence search unit 102 determines whether or not an order, to which a sequential order is assigned, in the selected initial order sequence 110 is a first order of a group to which an order is assigned (step S204).

In a case where the order is the first order of the group to which the order is assigned (step S204: Yes), the order sequence search unit 102 assigns a first order of the candidate orders, to which sequential orders have not been assigned, from among orders arranged in a one-dimensional array, to the head of the group (step S205). Thereafter, the order sequence search unit 102 returns to step S204.

On the other hand, in a case where the order is not the first order of the group to which the order is assigned (step S204: No), the order sequence search unit 102 assigns the candidate order as a next order one by one and specifies an order with an optimum index value. Then, the order sequence search unit 102 assigns the specified order as a next order in the group (step S206).

Next, the order sequence search unit 102 determines whether or not sequential orders have been assigned to all the orders included in the initial order sequence 110 (step S207). In a case where an order to which a sequential order has not been assigned remains (step S207: No), the order sequence search unit 102 returns to step S204.

On the other hand, in a case where the sequential orders have been assigned to all the orders included in the initial order sequence 110 (step S207: Yes), the order sequence search unit 102 outputs an optimum candidate order sequence generated by assigning the sequential orders to all the orders, to the efficiency index evaluation unit 103. Thereafter, the order sequence search unit 102 determines whether or not the order sequence search has been completed for all of the predetermined number of acquired initial order sequences 110 (step S208). In a case where an initial order sequence 110 on which the order sequence search has not been performed remains (step S208: No), the order sequence search unit 102 returns to step S203.

On the other hand, in a case where the order sequence search has been completed for all of the predetermined number of initial order sequences 110 (step S208: Yes), the efficiency index evaluation unit 103 determines whether or not the order sequence search has reached a predetermined generation (step S209). In a case where the order sequence search does not reach the predetermined generation (step S209: No), the efficiency index evaluation unit 103 outputs a value of an index of an optimum candidate order sequence corresponding to each initial order sequence 110 at that time to the initial order sequence generation unit 101. The initial order sequence generation unit 101 generates a predetermined number of next-generation initial order sequences 110 using the genetic algorithm (step S210). Thereafter, the processing for determining the optimum order combination returns to step S203.

On the other hand, in a case where the order sequence search has reached the predetermined generation (step S209: Yes), the efficiency index evaluation unit 103 determines whether or not the change range reaches the end of the initial order sequence 110 (step S211). In a case where the change range does not reach the end of the initial order sequence 110 (step S211: No), the efficiency index evaluation unit 103 outputs a value of an index of an optimum candidate order sequence corresponding to each initial order sequence 110 at that time to the first sequential order determination unit 106. The first sequential order determination unit 106 specifies an optimum candidate order with the best index value, assigns a sequential order that is a head of the change range to a first order in the change range in the specified optimum candidate order, and determines a first sequential order of the change range (step S212). Thereafter, the processing for determining the optimum order combination returns to step S201.

On the other hand, in a case where the change range has reached the end of the initial order sequence 110 (step S211: Yes), the efficiency index evaluation unit 103 compares values of indexes of the respective optimum candidate order sequences and determines an optimum order sequence from among the optimum candidate order sequences (step S213). Thereafter, the efficiency index evaluation unit 103 outputs the optimum order sequence to the order combination conversion unit 12.

As described above, the order sequence determination device according to the present embodiment sets the orders in the set change range as the change targets, and generates the initial order sequences for each generation using the genetic algorithm as using the value of the index as the objective function. Then, the order sequence determination device determines the optimum candidate order sequence using the group unit sequential order determination procedure for the generated initial order sequences. Moreover, when reaching the predetermined generation, the order sequence determination device determines the sequential order of the first order in the change range in the optimum candidate order sequence with the best index value, from among the optimum candidate order sequences. The order sequence determination device determines the sequential orders of all the orders having the better indexes by repeating the sequential order of the first order in the change range. As a result, an order sequence with a more preferred index value can be specified, and the picking work efficiency can be further improved.

For example, the number of times of calculations of a picking index in a case where the number of orders is 200 and the number of orders combined in one group is three will be discussed. In a case of round robin, the number of times of calculations is about the 288th power of 10 as indicated in the following formula (1).
[Expression 1]

$$\left({}_{200}C_3 *{}_{197}C_3 *...*{}_8C_3 *{}_5C_3\right)/{}_{68}P_{68} \fallingdotseq 10^{288} \qquad \cdots(1)$$

On the other hand, in a case where a preferred order combination is selected using the information processing apparatus according to the present embodiment, the number of times of calculations is about the eighth power of 10 as indicated in the following formula (2).
[Expression 2]

$$(199+198+196+195+...+7+6+4+3)*\{(200-6+1)*10*10\} \fallingdotseq 10^8 \qquad \cdots(2)$$

Although an exact optimum solution can be reached in a round robin manner, in that case, an enormous amount of calculation is performed as indicated in the formula (1). Therefore, a calculation time is unrealistic. On the other hand, in a case where the information processing apparatus according to the present embodiment is used, it is possible to obtain a solution with a better index within a realistic time.

[Third Embodiment]

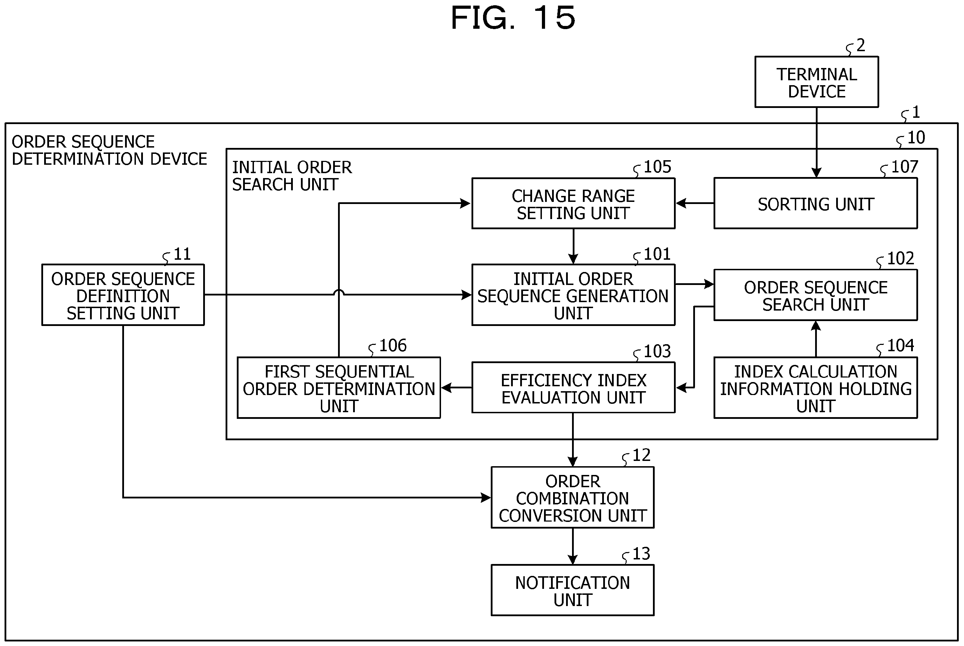

FIG. 15 is a block diagram of an order sequence search device according to a third embodiment. An order sequence determination device 1 according to the present embodiment differs from the second embodiment in that the order sequence determination device 1 sorts sequential orders of orders under predetermined conditions and generates an initial order sequence 110. The order sequence determination device 1 according to the present embodiment includes a sorting unit 107 in addition to each unit in the second embodiment. In the following description, description of an operation of each unit similar to the operation of each unit in the first embodiment and the second embodiment will be omitted.

The sorting unit 107 has predetermined sorting conditions. The sorting unit 107 holds the sorting conditions, for example, a descending order of a travel distance in order unit, a descending order of the number of new products to be picked for each order, or the like.

The sorting unit 107 acquires a picking order list 21 from a terminal device 2. Then, the sorting unit 107 sorts orders registered in the picking order list 21 according to the sorting conditions. Thereafter, the sorting unit 107 outputs information regarding the orders arranged in the sorted sequence to the change range setting unit 105.

In a case where a total travel distance is used as a picking index, the sorting unit 107 sorts orders in descending order of the total travel distance obtained using the information of the inter-area travel distance table 142 illustrated in FIG. 6, for example. One-way travel is excluded in calculation of the total travel distance.

An initial order sequence generation unit 101 generates an initial order by changing sequential orders of orders included in a change range for orders in a one-dimensional array arranged in the sorted sequence.

Thereafter, the initial order sequence generation unit 101, an order sequence search unit 102, and an efficiency index evaluation unit 103 repeat the generation of the initial order sequence 110 for each generation using the orders arranged in the sorted sequence and determination of an optimal candidate order using a group unit sequential order determination procedure.

After order search processing is executed up to a predetermined generation, a first sequential order determination unit 106 determines a sequential order of a first order in the change range and finally determines the sequential orders of all the orders. Accordingly, the efficiency index evaluation unit 103 determines the optimum order sequence.

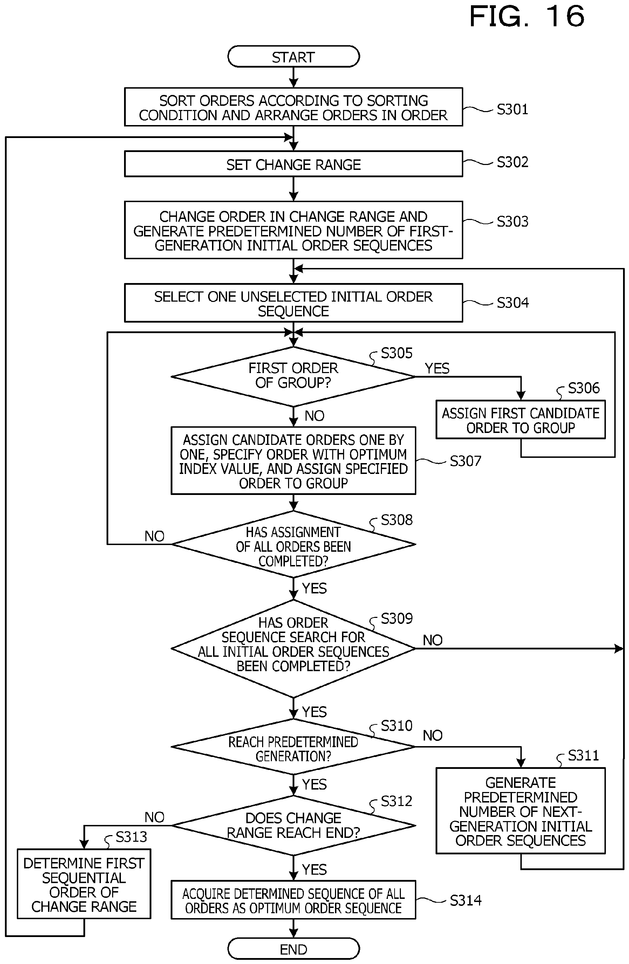

FIG. 16 is a flowchart illustrating details of the processing for determining an optimum order combination according to the third embodiment. FIG. 16 corresponds to an example of the processing executed in step S2 in FIG. 9. Next, a detailed flow of the processing for determining the optimum order combination according to the present embodiment will be described with reference to FIG. 16.

The sorting unit 107 acquires a picking order list 21 from a terminal device 2. Then, the sorting unit 107 sorts orders registered in the picking order list 21 according to the sorting conditions and arranges the orders in order (step S301).

The change range setting unit 105 sets a change range of an order sequence arranged in a one-dimensional array (step S302). Then, the change range setting unit 105 outputs information regarding the change range and information regarding an order of which a sequential order has been determined to the initial order sequence generation unit 101.

The initial order sequence generation unit 101 receives an input of the information regarding the change range and the information regarding the order of which the sequential order has been determined, from the change range setting unit 105. Then, the initial order sequence generation unit 101 sets a candidate order included in the designated change range in the sorted order sequence arranged in order as a change target, fixes the order of which the sequential order has been already determined and remaining candidate orders, and generates a predetermined number of first-generation initial order sequences 110 (step S303). Then, the initial order sequence generation unit 101 outputs the generated initial order sequence 110 to the order sequence search unit 102.

The order sequence search unit 102 acquires the predetermined number of initial order sequences 110. Then, the order sequence search unit 102 selects one initial order sequence 110 from among the unselected initial order sequences 110 (step S304).

Next, the order sequence search unit 102 determines whether or not an order in the selected initial order sequence 110, to which a sequential order is assigned, is a first order of a group to which an order is assigned (step S305).

In a case where the order is the first order of the group to which the order is assigned (step S305: Yes), the order sequence search unit 102 assigns a first order of the candidate orders, to which the sequential orders have not been assigned, from among the orders arranged in the one-dimensional array, to the head of the group (step S306). Thereafter, the order sequence search unit 102 returns to step S305.

On the other hand, in a case where the order is not the first order of the group to which the order is assigned (step S305: No), the order sequence search unit 102 assigns the candidate order one by one as a next order and specifies an order with an optimum index value. Then, the order sequence search unit 102 assigns the specified order as a next order in the group (step S307).

Next, the order sequence search unit 102 determines whether or not sequential orders have been assigned to all the orders included in the initial order sequence 110 (step S308). In a case where an order to which a sequential order has not been assigned remains (step S308: No), the order sequence search unit 102 returns to step S305.

On the other hand, in a case where the sequential orders have been assigned to all the orders included in the initial order sequence 110 (step S308: Yes), the order sequence search unit 102 outputs an optimum candidate order sequence generated by assigning the sequential orders to all the orders, to the efficiency index evaluation unit 103. Thereafter, the order sequence search unit 102 determines whether or not the order sequence search has been completed for all of the predetermined number of acquired initial order sequences 110 (step S309). In a case where an initial order sequence 110 on which the order sequence search has not been performed remains (step S309: No), the order sequence search unit 102 returns to step S304.

On the other hand, in a case where the order sequence search has been completed for all of the predetermined number of initial order sequences 110 (step S309: Yes), the efficiency index evaluation unit 103 determines whether or not the order sequence search has reached a predetermined generation (step S310). In a case where the order sequence search does not reach the predetermined generation (step S310: No), the efficiency index evaluation unit 103 outputs a value of an index of an optimum candidate order sequence corresponding to each initial order sequence 110 at that time to the initial order sequence generation unit 101. The initial order sequence generation unit 101 generates a predetermined number of next-generation initial order sequences 110 using the genetic algorithm (step S311). Thereafter, the processing for determining the optimum order combination returns to step S304.

On the other hand, in a case where the order sequence search has reached the predetermined generation (step S310: Yes), the efficiency index evaluation unit 103 determines whether or not the change range reaches the end of the initial order sequence 110 (step S312). In a case where the change range does not reach the end of the initial order sequence 110 (step S312: No), the efficiency index evaluation unit 103 outputs the value of the index of the optimum candidate order sequence corresponding to each initial order sequence 110 at that time to the first sequential order determination unit 106. The first sequential order determination unit 106 specifies an optimum candidate order with the best index value, assigns a sequential order that is a head of the change range to a first order of the change range in the specified optimum candidate order, and determines a first sequential order of the change range (step S313). Thereafter, the processing for determining the optimum order combination returns to step S302.

On the other hand, in a case where the change range has reached the end of the initial order sequence 110 (step S312: Yes), the efficiency index evaluation unit 103 compares the values of the indexes of the respective optimum candidate order sequences and determines an optimum order sequence from among the optimum candidate order sequences (step S314). Thereafter, the efficiency index evaluation unit 103 outputs the optimum order sequence to the order combination conversion unit 12.

As described above, the information processing apparatus according to the present embodiment changes the orders included in the change range based on the order sequence obtained by sorting the orders under the predetermined sorting conditions, creates the initial order sequence, and performs order search. Since the sequential orders of the orders are determined in order from the beginning, the information processing apparatus according to the present embodiment can process early a complicated order such as an order with a long total travel distance or an order with a large number of new products. By processing the complicated order early, it is possible to improve a processing efficiency of picking processing.

(Hardware Configuration)

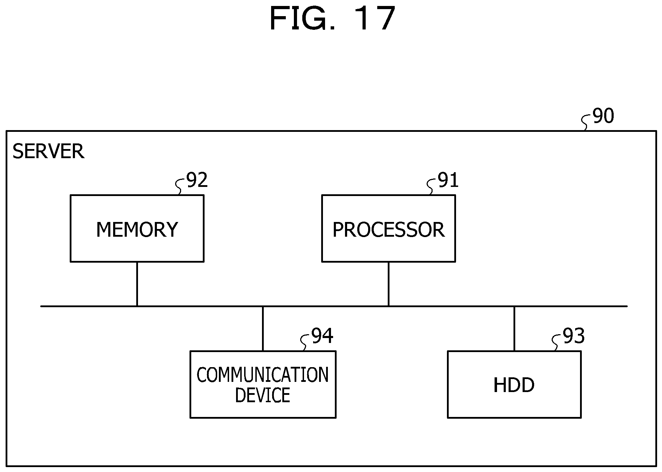

FIG. 17 is a hardware configuration diagram of a server. The order sequence determination device 1 according to each embodiment can be implemented, for example, by a server 90 in FIG. 17.

The server 90 includes a processor 91, a memory 92, a hard disk drive (HDD) 93, and a communication device 94. The processor 91 is coupled to the memory 92, the HDD 93, and the communication device 94 with a bus.

The communication device 94 has a function of a communication interface for communicating with an external device such as the terminal device 2. The communication device 94 relays the communication between the processor 91 and the external device.

The HDD 93 is an auxiliary storage device. The HDD 93 stores various programs including programs used to implement functions of the initial order search unit 10, the order combination conversion unit 12, and the notification unit 13 illustrated in FIG. 1, 11, or 15.

The processor 91 reads the various programs stored in the HDD 93, develops the programs on the memory 92 that is a main storage device, and executes the programs. As a result, the functions of the initial order search unit 10, the order combination conversion unit 12, and the notification unit 13 illustrated in FIG. 1, 11, or 15 are implemented.

REFERENCE SIGNS LIST

1      order sequence determination device
2      terminal device
10     initial order search unit
11     order sequence definition setting unit
12     order combination conversion unit
13     notification unit
101    initial order sequence generation unit
102    order sequence search unit
103    efficiency index evaluation unit
104    index calculation information holding unit
105    change range setting unit
106    first sequential order determination unit
107    sorting unit

**Claims**

1.  An information processing apparatus that receives a plurality of orders each of which includes information used to specify a plurality of picking targets and specifies an order sequence of the plurality of orders, the information processing apparatus comprising:

    an initial order sequence generation unit configured to generate an initial order sequence of a candidate order to which the order sequence is not assigned, from among the plurality of orders;
    an order sequence search unit configured to repeat processing for generating a combination of the orders by selecting a first order of the initial order sequence, selecting an order with a best index of a picking efficiency for the first order, from the subsequent candidate orders, and assigning the order sequence and to determine the order sequence of the plurality of orders divided for each combination; and
    an efficiency index evaluation unit configured to determine an optimum order sequence with the best index of the picking efficiency for the plurality of orders, based on a plurality of the different order sequences determined by the order sequence search unit.

2.  The information processing apparatus according to claim 1, wherein

    the initial order sequence generation unit generates a plurality of the initial order sequences in order by dividing the plurality of orders into a plurality of combinations that includes some consecutive orders,
    the order sequence search unit determines the order sequence generated by selecting the combination from the first initial order sequence in order for each of the initial order sequences, assigning a first candidate order of the candidate orders to a head of each selected combination, selecting the candidate order with the best index of the picking efficiency, and sequentially assigning sequential orders to the orders other than the head in the combination, as an optimum candidate order sequence for the initial order sequence, and
    the efficiency index evaluation unit includes an efficiency index evaluation unit that calculates a value of the index of the picking efficiency of the respective optimum candidate order sequence for each of the initial order sequences and determines the optimum order sequence based on the calculated value of the index.

3.  The information processing apparatus according to claim 2, further comprising:

    a change range setting unit configured to set a predetermined number of candidate orders from the head of the candidate orders as a change range; and
    a first sequential order determination unit configured to determine a first order of the change range in the optimum candidate order sequence with the best index of the picking efficiency, from among the respective optimum candidate order sequences for each of the initial order sequences calculated by the efficiency index evaluation unit, as a first order of the candidate orders and assign a sequential order, and notify the change range setting unit of the remaining candidate orders, wherein
    the initial order sequence generation unit generates a plurality of the initial order sequences by changing the sequence of the orders in the change range set by the change range setting unit, and
    the efficiency index evaluation unit sets an order sequence in which sequential orders of all of the plurality of orders are determined by the first sequential order determination unit as an optimum order sequence.

4.  The information processing apparatus according to claim 2, wherein

    a value of the index of each order is enabled to be calculated,
    the information processing apparatus further comprising:

        a sorting unit configured to arrange the plurality of orders according to the value of the index, wherein
        the initial order sequence generation unit generates the initial order sequence based on the plurality of orders arranged by the sorting unit.

5.  The information processing apparatus according to any one of claims 1 to 4, wherein the index is one of a total travel distance, a product duplication rate, or an absolute difference from an average value of product weights for each combination or a value calculated from a plurality of indexes.

6.  A search method that receives a plurality of orders each of which includes information used to specify a plurality of picking targets and specifies an order sequence of the plurality of orders, the search method comprising:

generating an initial order sequence of a candidate order to which the order sequence is not assigned, from among the plurality of orders;

repeating processing for generating a combination of the orders by selecting a first order of the initial order sequence, selecting an order with a best index of a picking efficiency for the first order, from the subsequent candidate orders, and assigning the order sequence and to determine the order sequence of the plurality of orders divided for each combination; and

determining an optimum order sequence with the best index of the picking efficiency for the plurality of orders, based on a plurality of the different order sequences determined by the order sequence search unit.

7. A search program that causes a computer to execute a process that receives a plurality of orders each of which includes information used to specify a plurality of picking targets and specifies an order sequence of the plurality of orders, the process comprising:

generating an initial order sequence of a candidate order to which the order sequence is not assigned, from among the plurality of orders;

repeating processing for generating a combination of the orders by selecting a first order of the initial order sequence, selecting an order with a best index of a picking efficiency for the first order, from the subsequent candidate orders, and assigning the order sequence and to determine the order sequence of the plurality of orders divided for each combination; and

determining an optimum order sequence with the best index of the picking efficiency for the plurality of orders, based on a plurality of the different order sequences determined by the order sequence search unit.

# FIG. 1

# FIG. 2

21

| ORDER No. | SHELF NUMBER | ADDRESS | LEVEL | PRODUCT NAME | THE NUMBER | WEIGHT [g] | VOLUME [cm³] |
|---|---|---|---|---|---|---|---|
| a1 | 1 | 3 | 3 | AAA | 1 | 300 | 250 |
| a1 | 3 | 4 | 1 | BBB | 1 | 100 | 200 |
| a1 | 11 | 2 | 2 | CCC | 1 | 200 | 50 |
| a1 | 25 | 8 | 4 | DDD | 1 | 50 | 100 |
| a2 | 2 | 4 | 1 | BBB | 2 | 100 | 200 |
| a2 | 25 | 8 | 4 | DDD | 1 | 50 | 100 |
| a3 | 1 | 3 | 3 | AAA | 1 | 300 | 250 |
| a3 | 3 | 4 | 1 | BBB | 1 | 100 | 200 |
| a3 | 37 | 1 | 1 | EEE | 2 | 500 | 200 |
| … | … | … | … | … | … | … | … |

# FIG. 3

EP 4 242 944 A1

| GROUP No. | ORDER No. | | |
|:---:|:---:|:---:|:---:|
| G1 | a1 | a2 | a3 |
| G2 | a4 | a5 | a6 |
| ... | . | . | . |
| G67 | a199 | a200 | - |

150

110

| a1 | a2 | a3 | a4 | a5 | a6 | ... | a198 | a199 | a200 |
|:---:|:---:|:---:|:---:|:---:|:---:|:---:|:---:|:---:|:---:|

151  152  153

FIG. 4

300

EP 4 242 944 A1

# FIG. 5

141

| SHELF NUMBER | AREA NUMBER |
|:---:|:---:|
| #1 | A1 |
| #2 | A1 |
| #3 | A1 |
| #4 | A1 |
| #5 | A2 |
| #6 | A2 |
| … | … |
| #62 | A16 |
| #63 | A16 |
| #64 | A16 |

# FIG. 6

EP 4 242 944 A1

|  | A1 | A2 | A3 | ... | A14 | A15 | A16 |
|---|---|---|---|---|---|---|---|
| A1 | 0 | 10 | 22 | ... | 132 | 144 | 154 |
| A2 | 9999 | 0 | 12 | ... | 122 | 134 | 144 |
| A3 | 9999 | 9999 | 0 | ... | 110 | 122 | 132 |
| ... | ... | ... | ... | ... | ... | ... | ... |
| A14 | 9999 | 9999 | 9999 | ... | 0 | 12 | 22 |
| A15 | 9999 | 9999 | 9999 | ... | 9999 | 0 | 10 |
| A16 | 9999 | 9999 | 9999 | ... | 9999 | 9999 | 0 |

142

# FIG. 7

| a1 | a2 | a3 | a4 | a5 | a6 | ⋯ | a198 | a199 | a200 |

110

▽

| **a1** | | a2 | a3 | a4 | a5 | a6 | ⋯ | a198 | a199 | a200 |

111

▽

| **a1** | **a7** | | a2 | a3 | a4 | a5 | ⋯ | a198 | a199 | a200 |

112

▽

| **a1** | **a7** | **a11** | | a2 | a3 | a4 | ⋯ | a198 | a199 | a200 |

113

▽

| **a1** | **a7** | **a11** | **a2** | | a3 | a4 | ⋯ | a198 | a199 | a200 |

114

▽

...

EP 4 242 944 A1

# FIG. 8

| a1 | a2 | a3 | a4 | a5 | a6 | ··· | a198 | a199 | a200 |

▽ 110A / 115A

| a1 | a7 | a11 | a2 | a34 | a200 | ··· | a178 | a192 | a199 |

110B

| a5 | a12 | a64 | a34 | a1 | a2 | ··· | a105 | a97 | a167 |

▽ 115B

| a5 | a11 | a42 | a12 | a3 | a60 | ··· | a111 | a163 | a122 |

···

EP 4 242 944 A1

# FIG. 9

```
                    ┌─────────────┐
                    │    START    │
                    └──────┬──────┘
                           │
           ┌───────────────▼───────────────┐
           │ ACQUIRE ORDER SEQUENCE         │
           │ DEFINITION OF ORDER SEQUENCE   │──── S1
           │ THAT DEFINES ORDER COMBINATION │
           └───────────────┬───────────────┘
                           │
           ┌───────────────▼───────────────┐
           │ GENERATE PLURALITY OF INITIAL  │
           │ ORDER SEQUENCES, SEARCH FOR    │
           │ ORDER SEQUENCE FOR EACH        │──── S2
           │ INITIAL ORDER SEQUENCE, AND    │
           │ DETERMINE OPTIMUM ORDER        │
           │ SEQUENCE                       │
           └───────────────┬───────────────┘
                           │
           ┌───────────────▼───────────────┐
           │ GENERATE OPTIMUM ORDER         │
           │ COMBINATION FROM OPTIMUM       │──── S3
           │ ORDER SEQUENCE                 │
           └───────────────┬───────────────┘
                           │
           ┌───────────────▼───────────────┐
           │ NOTIFY OPTIMUM ORDER           │──── S4
           │ COMBINATION                    │
           └───────────────┬───────────────┘
                           │
                    ┌──────▼──────┐
                    │     END     │
                    └─────────────┘
```

# FIG. 10

START

S101

SET NEW INITIAL ORDER SEQUENCE

S102

FIRST ORDER OF GROUP? — YES

NO

S104

ASSIGN CANDIDATE ORDERS ONE BY ONE, SPECIFY ORDER WITH OPTIMUM INDEX VALUE, AND ASSIGN SPECIFIED ORDER TO GROUP

S103

ASSIGN FIRST CANDIDATE ORDER TO GROUP

S105

NO — HAS ASSIGNMENT OF ALL ORDERS BEEN COMPLETED?

YES

S106

NO — PREDETERMINED NUMBER OF TIMES OF EXECUTIONS?

YES

S107

DETERMINE OPTIMUM ORDER SEQUENCE FROM OPTIMUM CANDIDATE ORDER SEQUENCES

END

# FIG. 11

TERMINAL DEVICE ~2

ORDER SEQUENCE DETERMINATION DEVICE ~1

~10

INITIAL ORDER SEARCH UNIT

ORDER SEQUENCE DEFINITION SETTING UNIT ~11

CHANGE RANGE SETTING UNIT ~105

INITIAL ORDER SEQUENCE GENERATION UNIT ~101

ORDER SEQUENCE SEARCH UNIT ~102

FIRST SEQUENTIAL ORDER DETERMINATION UNIT ~106

EFFICIENCY INDEX EVALUATION UNIT ~103

INDEX CALCULATION INFORMATION HOLDING UNIT ~104

ORDER COMBINATION CONVERSION UNIT ~12

NOTIFICATION UNIT ~13

EP 4 242 944 A1

# FIG. 12

EP 4 242 944 A1

**FIRST GENERATION**

| 110A | 110B | 110C | | 110D | 110E | 110F |
|---|---|---|---|---|---|---|
| INITIAL ORDER SEQUENCE | INITIAL ORDER SEQUENCE | INITIAL ORDER SEQUENCE | ... | INITIAL ORDER SEQUENCE | INITIAL ORDER SEQUENCE | INITIAL ORDER SEQUENCE |
| ↓P | ↓P | ↓P | | ↓P | ↓P | ↓P |
| OPTIMUM CANDIDATE ORDER SEQUENCE | OPTIMUM CANDIDATE ORDER SEQUENCE | OPTIMUM CANDIDATE ORDER SEQUENCE | | OPTIMUM CANDIDATE ORDER SEQUENCE | OPTIMUM CANDIDATE ORDER SEQUENCE | OPTIMUM CANDIDATE ORDER SEQUENCE |
| TOTAL TRAVEL DISTANCE *** | TOTAL TRAVEL DISTANCE *** | TOTAL TRAVEL DISTANCE *** | | TOTAL TRAVEL DISTANCE *** | TOTAL TRAVEL DISTANCE *** | TOTAL TRAVEL DISTANCE *** |

GOOD INDIVIDUAL (SOLUTION) IS INHERITED

POOR INDIVIDUAL (SOLUTION) IS ELIMINATED

**SECOND GENERATION**

| 111A | 111B | 111C | | 111D | 111E | 111F |
|---|---|---|---|---|---|---|
| INITIAL ORDER SEQUENCE | INITIAL ORDER SEQUENCE | INITIAL ORDER SEQUENCE | ... | INITIAL ORDER SEQUENCE | INITIAL ORDER SEQUENCE | INITIAL ORDER SEQUENCE |
| ↓P | ↓P | ↓P | | ↓P | ↓P | ↓P |
| OPTIMUM CANDIDATE ORDER SEQUENCE | OPTIMUM CANDIDATE ORDER SEQUENCE | OPTIMUM CANDIDATE ORDER SEQUENCE | | OPTIMUM CANDIDATE ORDER SEQUENCE | OPTIMUM CANDIDATE ORDER SEQUENCE | OPTIMUM CANDIDATE ORDER SEQUENCE |
| TOTAL TRAVEL DISTANCE *** | TOTAL TRAVEL DISTANCE *** | TOTAL TRAVEL DISTANCE *** | | TOTAL TRAVEL DISTANCE *** | TOTAL TRAVEL DISTANCE *** | TOTAL TRAVEL DISTANCE *** |

...

**10TH GENERATION**

| 112A | 112B | 112C | | 112D | 112E | 112F |
|---|---|---|---|---|---|---|
| INITIAL ORDER SEQUENCE | INITIAL ORDER SEQUENCE | INITIAL ORDER SEQUENCE | ... | INITIAL ORDER SEQUENCE | INITIAL ORDER SEQUENCE | INITIAL ORDER SEQUENCE |
| ↓P | ↓P | ↓P | | ↓P | ↓P | ↓P |
| OPTIMUM CANDIDATE ORDER SEQUENCE | OPTIMUM CANDIDATE ORDER SEQUENCE | OPTIMUM CANDIDATE ORDER SEQUENCE | | OPTIMUM CANDIDATE ORDER SEQUENCE | OPTIMUM CANDIDATE ORDER SEQUENCE | OPTIMUM CANDIDATE ORDER SEQUENCE |
| TOTAL TRAVEL DISTANCE *** | TOTAL TRAVEL DISTANCE *** | TOTAL TRAVEL DISTANCE *** | | TOTAL TRAVEL DISTANCE *** | TOTAL TRAVEL DISTANCE *** | TOTAL TRAVEL DISTANCE *** |

# FIG. 13

OPTIMUM CANDIDATE
ORDER SEQUENCE & INDEX

OPTIMUM CANDIDATE
ORDER SEQUENCE & INDEX

OPTIMUM CANDIDATE
ORDER SEQUENCE & INDEX

DETERMINE HEAD OF
CHANGE RANGE

# FIG. 14

```
                        ( START )
                            │
    ┌───────────────────────┼
    │                       ▼
    │   ┌───────────────────────────────────┐
    │   │         SET CHANGE RANGE           │──── S201
    │   └───────────────────────────────────┘
    │                       │
    │                       ▼
    │   ┌───────────────────────────────────┐
    │   │ CHANGE ORDER IN CHANGE RANGE AND   │
    │   │ GENERATE PREDETERMINED NUMBER OF   │──── S202
    │   │ FIRST-GENERATION INITIAL ORDER     │
    │   │ SEQUENCES                          │
    │   └───────────────────────────────────┘
    │                       │
    │        ┌──────────────┼◄─────────────────────────────┐
    │        │              ▼                               │
    │   ┌───────────────────────────────────┐               │
    │   │ SELECT ONE UNSELECTED INITIAL      │──── S203      │
    │   │           ORDER SEQUENCE           │               │
    │   └───────────────────────────────────┘               │
    │        ┌──────────────┼◄──────────────────────┐       │
    │        │              ▼                        │       │
    │        │         ╱──────────╲   S204           │       │
    │        │        ╱ FIRST ORDER ╲   YES          │       │
    │        │       ╱  OF GROUP?    ╲────────┐      │       │
    │        │        ╲             ╱         ▼      │       │
    │        │         ╲──────────╱    ┌─────────────┐       │
    │        │              │ NO       │ ASSIGN FIRST│ S205  │
    │        │              ▼          │ CANDIDATE   │       │
    │        │  ┌───────────────────┐  │ ORDER TO    │       │
    │        │  │ ASSIGN CANDIDATE  │  │ GROUP       │       │
    │        │  │ ORDERS ONE BY ONE,│  └─────────────┘       │
    │        │  │ SPECIFY ORDER WITH│       │                │
    │        │  │ OPTIMUM INDEX     │ S206  │                │
    │        │  │ VALUE, AND ASSIGN │       │                │
    │        │  │ SPECIFIED ORDER   │       │                │
    │        │  │ TO GROUP          │       │                │
    │        │  └───────────────────┘       │                │
    │        │              │◄──────────────┘                │
    │        │              ▼                                │
    │        │         ╱──────────╲   S207                   │
    │   NO   │        ╱ HAS         ╲                         │
    │◄───────┴───────╱ ASSIGNMENT OF ╲                        │
    │                ╲ ALL ORDERS    ╱                        │
    │                 ╲ COMPLETED?  ╱                         │
    │                  ╲──────────╱                           │
    │                      │ YES                              │
    │                      ▼                                  │
    │                 ╱──────────╲   S208                     │
    │                ╱ HAS ORDER   ╲   NO                      │
    │               ╱ SEQUENCE      ╲──────────────────────────┘
    │               ╲ SEARCH FOR ALL╱
    │                ╲ INITIAL ORDER╱
    │                 ╲ SEQUENCES  ╱
    │                  ╲ COMPLETED?╱
    │                      │ YES
    │                      ▼
    │                 ╱──────────╲   S209
    │                ╱ REACH       ╲   NO        ┌──────────────┐
    │               ╱ PREDETERMINED ╲───────────►│ GENERATE     │ S210
    │               ╲ GENERATION?   ╱            │ PREDETERMINED│
    │                ╲────────────╱              │ NUMBER OF    │
    │                      │ YES                 │ NEXT-        │
    │                      ▼                     │ GENERATION   │
    │                 ╱──────────╲   S211        │ INITIAL      │
    │      NO        ╱ DOES CHANGE ╲             │ ORDER        │
    │◄──────────────╱ RANGE REACH   ╲            │ SEQUENCES    │
    │      │         ╲ END?         ╱            └──────┬───────┘
    │      ▼          ╲──────────╱                      │
    │ ┌──────────┐        │ YES                         │
    │ │ DETERMINE│ S212   ▼                             │
    │ │ FIRST    │ ┌──────────────────────┐             │
    │ │ SEQUENTIAL│ │ ACQUIRE DETERMINED   │            │
    │ │ ORDER OF │ │ SEQUENCE OF ALL      │──── S213     │
    │ │ CHANGE   │ │ ORDERS AS OPTIMUM     │             │
    │ │ RANGE    │ │ ORDER SEQUENCE       │             │
    │ └────┬─────┘ └──────────┬───────────┘             │
    └──────┘                  ▼                         │
                          ( END )                       │
```

# FIG. 15

ORDER SEQUENCE
DETERMINATION DEVICE

INITIAL ORDER
SEARCH UNIT

TERMINAL DEVICE — 2

— 1

— 10

CHANGE RANGE SETTING UNIT — 105

SORTING UNIT — 107

ORDER SEQUENCE DEFINITION SETTING UNIT — 11

INITIAL ORDER SEQUENCE GENERATION UNIT — 101

ORDER SEQUENCE SEARCH UNIT — 102

FIRST SEQUENTIAL ORDER DETERMINATION UNIT — 106

EFFICIENCY INDEX EVALUATION UNIT — 103

INDEX CALCULATION INFORMATION HOLDING UNIT — 104

ORDER COMBINATION CONVERSION UNIT — 12

NOTIFICATION UNIT — 13

EP 4 242 944 A1

# FIG. 16

START

SORT ORDERS ACCORDING TO SORTING CONDITION AND ARRANGE ORDERS IN ORDER — S301

SET CHANGE RANGE — S302

CHANGE ORDER IN CHANGE RANGE AND GENERATE PREDETERMINED NUMBER OF FIRST-GENERATION INITIAL ORDER SEQUENCES — S303

SELECT ONE UNSELECTED INITIAL ORDER SEQUENCE — S304

FIRST ORDER OF GROUP? — S305

YES → ASSIGN FIRST CANDIDATE ORDER TO GROUP — S306

NO

ASSIGN CANDIDATE ORDERS ONE BY ONE, SPECIFY ORDER WITH OPTIMUM INDEX VALUE, AND ASSIGN SPECIFIED ORDER TO GROUP — S307

HAS ASSIGNMENT OF ALL ORDERS BEEN COMPLETED? — S308

NO

YES

HAS ORDER SEQUENCE SEARCH FOR ALL INITIAL ORDER SEQUENCES BEEN COMPLETED? — S309

NO

YES

REACH PREDETERMINED GENERATION? — S310

NO → GENERATE PREDETERMINED NUMBER OF NEXT-GENERATION INITIAL ORDER SEQUENCES — S311

YES

DOES CHANGE RANGE REACH END? — S312

NO → DETERMINE FIRST SEQUENTIAL ORDER OF CHANGE RANGE — S313

YES

ACQUIRE DETERMINED SEQUENCE OF ALL ORDERS AS OPTIMUM ORDER SEQUENCE — S314

END

# FIG. 17

**INTERNATIONAL SEARCH REPORT**

| International application No. |
| --- |
| PCT/JP2020/041601 |

A. CLASSIFICATION OF SUBJECT MATTER
G06Q 10/08(2012.01)i
FI: G06Q10/08 330
According to International Patent Classification (IPC) or to both national classification and IPC

B. FIELDS SEARCHED

Minimum documentation searched (classification system followed by classification symbols)
G06Q10/08

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2015-506324 A (MATTHEWS RESOURCES, INC.) 02 March 2015 (2015-03-02) entire text, all drawings | 1–7 |
| A | JP 2000-118640 A (SEKISUI CHEMICAL CO., LTD.) 25 April 2000 (2000-04-25) entire text, all drawings | 1–7 |
| A | JP 2018-144964 A (RICOH CO., LTD.) 20 September 2018 (2018-09-20) entire text, all drawings | 1–7 |

☐ Further documents are listed in the continuation of Box C. ☒ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 13 January 2021 (13.01.2021) | 26 January 2021 (26.01.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

| International application no. |
| --- |
| PCT/JP2020/041601 |

| Patent Documents referred in the Report | Publication Date | Patent Family | Publication Date |
| --- | --- | --- | --- |
| JP 2015-506324 A | 02 Mar. 2015 | US 2014/0351101 A1 the whole document WO 2013/116620 A1 EP 2810225 A1 CA 2863811 A1 CN 104205135 A HK 1202957 A | |
| JP 2000-118640 A | 25 Apr. 2000 | (Family: none) | |
| JP 2018-144964 A | 20 Sep. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020057252 A
- JP 2000118640 A
- JP 2015059023 A
- JP 2012116582 A